# NEUE EUROPÄISCHE PATENTSCHRIFT

(11) **EP 3 408 146 B2**
(45) Veröffentlichungstag und Bekanntmachung des Hinweises auf die Entscheidung über den Einspruch: **11.03.2026**
(45) Hinweis auf die Patenterteilung: 22.01.2020
(21) Anmeldenummer: 17701330.7
(22) Anmeldetag: 25.01.2017
(51) Int. Cl.: B60S 3/04

(54) **KONFIGURATION EINES REINIGUNGSPROZESSES EINER FAHRZEUGWASCHANLAGE ZUR SELBSTBEDIENUNG**
CONFIGURATION OF A CLEANING PROCESS IN A SELF-SERVICE VEHICLE WASH
CONFIGURATION D'UN PROCESSUS DE NETTOYAGE DANS UNE STATION DE LAVAGE DE VÉHICULES POUR LE LIBRE SERVICE

(30) Priorität: 28.01.2016 DE 102016101482
(43) Veröffentlichungstag der Anmeldung: 05.12.2018
(73) Patentinhaber: WashTec Holding GmbH, 86153 Augsburg (DE)
(72) Erfinder: KECHELE, Sven Christian, 86391 Stadtbergen (DE)
(74) Vertreter: Schwarz, Claudia
(86) Internationale Anmeldenummer: PCT/EP2017/051498
(87) Internationale Veröffentlichungsnummer: WO 2017/129593

(56) Entgegenhaltungen:
- WO-A2-02/099579
- DE-T2- 69 812 064
- US-A- 4 848 384
- US-A- 5 381 962
- US-A- 6 125 860
- US-A1- 2008 235 614

## Beschreibung

Die vorliegende Erfindung betrifft eine Selbstbedienungsfahrzeugwaschanlage, eine Steuereinheit für diese Fahrzeugwaschanlage und ein Verfahren und ein Computerprogrammprodukt zur Konfiguration eines Reinigungsprozesses für eine Selbstbedienungs-Fahrzeugwaschanlage.

In Selbstbedienungs-Waschanlagen (SB-Waschanlagen) reinigen Fahrzeugbesitzer ihr Fahrzeug selbst, so dass kein Bedienpersonal benötigt wird. Die Fahrzeugreinigung erfolgt üblicherweise mit einer an sich bekannten Reinigungslanze, wie beispielsweise in der DE 698 12 064 T2 offenbart. Mit der Reinigungslanze wird in einem ersten Schritt Reinigungsflüssigkeit, in der Regel mit Waschchemikalien versetztes Wasser, auf die Fahrzeugoberflächen aufgesprüht. Das Wasser kann dabei unter Hochdruck verwendet werden (HD-Lanze) und/oder mit einer bestimmten Wasserqualität verwendet werden, z.B. in enthärteter Form. Die Auswahl und Anzeige des Waschprogramms sowie die Einleitung und Anzeige der einzelnen Waschschritte wird in der Regel an einem zentralen Bedienautomaten vorgenommen, in den Münzen oder andere Wertmittel eingeworfen werden können, um den Waschvorgang zu starten.

Die WO 02/099579 A2 beschreibt eine zentrale Steuerung einer Waschstraße über eine zugeschaltete Steuerstation mit einem Touchdisplay. Dabei sollen die einzelnen Aggregate der Waschanlage einzeln und von zentraler Stelle angesteuert und rekonfiguriert werden. Allerdings wird das Waschprogramm selbst mit fest definierten und vorprogrammierten Software-Bausteinen betrieben. Eine freie Konfiguration eines Waschprogramms wird in dieser Druckschrift nicht angeregt.

Die US 2008/0235614 beschreibt die Möglichkeit, Geräte für unterschiedliche Anwendungen (darunter auch Waschanwendungen in Form einer Waschmaschine), die von mehreren Anwendern benutzt werden können, über eine grafische Benutzeroberfläche zu steuern. Dazu können vom Anwender Parameter bestimmt werden, die für die Gerätesteuerung verwendet werden. Diese können auch benutzer-individuell gespeichert werden. Auch diese Druckschrift betrifft nicht die Steuerung von Fahrzeugwaschanlagen, bei denen mehrere Arbeitsgeräte bedient werden müssen.

Im Stand der Technik ist es weiter bekannt, dem Anwender vorkonfigurierte Waschprogramme (z.B. Schnell-Wäsche, Hochdruck-Wäsche, Aktivschaumwäsche, Glanzspülen etc.) zur Auswahl zur Verfügung zu stellen. Diese vorkonfigurierten Waschprogramme sind einer fest definierten Befehlsfolge zugeordnet. Mit dieser Befehlsfolge wird die SB-Waschanlage dann gesteuert und betrieben. Zur Bestimmung des Waschprogramms werden dem Anwender auf einem Eingabeterminal bislang hauptsächlich nur zwei Optionen angeboten: "buy time" oder "buy programme". Bei der ersten Option kauft der Kunde Waschzeit, in der er alle Arbeitsgeräte in beliebiger Kombination bedienen kann. Bei der zweiten Option werden dem Kunden vordefinierte Waschprogramme zur Auswahl angeboten. Zum Beispiel werden bei Wahl eines Programms mit der Nummer 1 ("Shampoo") folgende Reinigungsprozessschritte zur Ausführung durch den Anwender ausgelöst: Auftragen des Shampoos über eine Hochdrucklanze, Waschen des Fahrzeuges mit Wasser in vordefinierter Temperatur (diese kann bislang nicht durch den Anwender eingestellt werden) - z.B. mit einer Waschbürste - und Abspülen mit kaltem Wasser über die Hochdrucklanze und Wachsen über die Hochdrucklanze. Aufgrund der Vordefinition bzw. der festen Verdrahtung der Programme können diese im Stand der Technik somit zwangsläufig nicht modifiziert werden. In der Praxis hat es sich jedoch gezeigt, dass hier mehr Flexibilität gewünscht ist. Insbesondere sollten eine SB-Waschanlagensteuerung und ein SB-Waschanlagenbetrieb möglich sein, die/der an die aktuelle spezifische Situation angepasst ist.

US 2005/0234569 Dokument offenbart eine Fahrzeugwaschanlage zur Selbstbedienung gemäß dem Oberbegriff des Anspruchs 1.

Untersuchungen haben weiterhin gezeigt, dass es wünschenswert ist, dem Anwender noch mehr Gelegenheit zu geben, auf den Waschvorgang Einfluss zu nehmen. Insbesondere hat es sich als nachteilig erwiesen, dass der jeweilige Zustand des Fahrzeugs (z.B. des Verschmutzungsgrades) nicht bei der Konfiguration des Fahrzeugwaschprogramms berücksichtigt werden kann. Bei den bisherigen Systemen, konnte der Waschvorgang also nicht aufgrund des aktuellen Zustands geändert bzw. angepasst werden. Als nachteilig erweist es sich bei den bekannten Systemen also, dass ein Fahrzeugwaschprogramm nur auf Basis von vordefinierten Waschprogrammen gesteuert werden kann. Möchte der Anwender beispielsweise spezifizieren, dass er eine umweltschonende Wäsche ausführen möchte, so sollte ihm Gelegenheit gegeben werden, auf Parameter wie Temperatur oder die Verwendung von bestimmten umweltverträglichen Reinigungssubstanzen Einfluss zu nehmen. Dies ist bislang nicht möglich.

Die vorliegende Erfindung hat sich deshalb zur Aufgabe gestellt, den Betrieb von SB-Fahrzeugwaschanlagen zu verbessern und diese insbesondere flexibler zu steuern. Bei einer nur leichten Verschmutzung sollte es z.B. möglich sein, diese Situation automatisch oder halbautomatisch zu erkennen und dem Anwender situationsspezifische Waschprogramme zur Auswahl anzubieten, so dass es möglich wird, Waschmittelsubstanzen bzw. Reinigungssubstanzen möglichst gezielt und reduziert einzusetzen. Darüber hinaus sollte eine höhere Flexibilität bei der Konfiguration des Waschvorganges durch den Anwender bereitgestellt werden, so dass es möglich wird, eine individualisierte Wäsche auslösen zu können und dabei eine Option anzubieten, um den Ressourcen- und/oder Energiebedarf für den Waschvorgang zu senken.

Diese Aufgabe wird erfindungsgemäß durch eine SB-Fahrzeugwaschanlage, eine Steuereinheit und ein Verfahren sowie durch ein Computerprogrammprodukt gemäß den beiliegenden nebengeordneten Patentansprüchen gelöst.

Im Folgenden wird die Erfindung anhand der vorrichtungsgemäßen Aufgabenlösung und somit anhand der Steuereinheit beschrieben. Dabei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf eine Waschanlage oder auf eine Steuereinheit gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch elektronische Schaltkreisbauteile oder Mikroprozessor-Module der Vorrichtungen ausgebildet und umgekehrt.

Gemäß einem Aspekt betrifft die Erfindung eine Steuereinheit, wie beansprucht, zur Ansteuerung einer Selbstbedienungs-Fahrzeugwaschanlage und zur Ansteuerung von Arbeitsgeräten der SB-Fahrzeugwaschanlage. Die Steuereinheit ist dazu ausgelegt, von einer Ein- und Ausgabeeinheit, die als Benutzerschnittstelle dient und als Touchpanel ausgebildet sein kann, Konfigurationssignale einzulesen und in Antwort auf die eingelesenen Konfigurationssignale mittels einer Steuerlogik einen Reinigungsprozess zu konfigurieren und Steuerbefehle für die Arbeitsgeräte zu erzeugen und bei konfigurierbaren Aktivierungsbedingungen auszuführen.

Im Kern betrifft die vorliegende Erfindung damit eine situative und dynamische Steuerung einer SB-Waschanlage, basierend auf aktuell erfassten Konfigurationen (Kundenvorgaben). Darüber hinaus können zur Konfiguration des Reinigungsprozesses neben den Konfigurationseinstellungen auch Sensordaten, Umgebungsbedingungen und/oder Eingabesignale berücksichtigt werden. Dabei können die einzelnen Versorgungsaggregate und Maschinenbauteile der SB-Fahrzeugwaschanlage und/oder die jeweiligen Arbeitsgeräte der Fahrzeugwaschanlage (nämlich Lanzen und Bürsten und deren Versorgungseinrichtungen zur Versorgung mit Wasser, Temperatur, Druck etc.) modular und dezidiert angesteuert werden, in Abhängigkeit von den erfassten Konfigurationseinstellungen und ggf. Sensordaten.

Die Erfindung hat einige Vorteile. So wird es möglich, individualisierte Waschprogramme für den jeweiligen aktuellen Fall auf Basis von Kundeneinstellungen (und ggf. Sensorsignalen) zu konfigurieren und diese zu einem Waschprogramm zu kombinieren. Dem Anwender kann eine spezifisch für ihn zugeschnittene, maßgeschneiderte Fahrzeugwäsche angeboten werden und zwar nicht nur auf Basis von festen, vordefinierten Waschprogrammen, sondern auf Basis von individualisierten und spezifisch konfigurierten Waschprogrammschritten. Erfindungsgemäß können die einzelnen Waschprogrammschritte situativ konfiguriert werden. Des Weiteren kann der für den Waschvorgang erforderliche Ressourcenbedarf deutlich gesenkt werden und zwar nicht nur in Hinblick auf die Dosierung der zu applizierenden Reinigungsmittel, sondern auch in Hinblick auf den Gesamtenergiebedarf. Beispielsweise kann die Temperatur der Waschsubstanzen bzw. des Wassers situationsspezifisch verringert werden, falls für die Waschumgebung oder die Karosserie ein bestimmter Temperaturbereich erfasst worden ist. So kann beispielsweise eine zusätzliche Erhitzung des Wassers entfallen, wenn eine Sensoreinheit erfasst hat, dass eine Umgebungstemperatur einen vordefinierbaren Schwellenwert überschreitet. Deshalb ist die Steuereinheit gemäß einer bevorzugten Ausführungsform der Erfindung datentechnisch mit einer Sensoreinheit gekoppelt, um Sensorsignale zur Temperatur, Luftfeuchtigkeit einer aktuellen Waschumgebung zu erfassen und diese Daten zur Konfiguration des Reinigungsprozesses zu verrechnen.

In einer bevorzugten Ausführungsform der Erfindung verrechnet die Steuereinheit zur Steuerung der Arbeitsgeräte die erfassten Konfigurationssignale und Eingangssignale. Bei Letzteren kann es sich insbesondere um Eingangssingale von einem Sensor einer Wertmittelaufnahmeeinheit und/oder von weiteren Sensoren handeln. Dies hat den technischen Vorteil, dass dem Anwender situationsabhängig nur die spezifischen Reinigungsprozesse vorgeschlagen werden können, die in dem jeweiligen Fall auch sinnvoll sind (z.B. wird bei Erfassen von Nässe/Regen keine Trocknung als Schritt des Reinigungsprozesses vorgeschlagen, so dass die angebotenen Konfigurationen in diesem Fall keinen Trocknungsschritt umfassen).

Erfindungsgemäß umfassen die Steuerbefehle folgende Befehle, um entsprechende Steuerungsvorgänge auszulösen:
- Eine zeitphasen-basierte Aktvierung und/oder Deaktivierung von unterschiedlichen Arbeitsgeräten;
- eine automatische und dedizierte Drucksteuerung, Temperatursteuerung und/oder Zeitsteuerung,
- eine automatische und dedizierte Steuerung eines Volumenstroms und damit einer Düsenaustrittsgeschwindigkeit / Impact des Sprühstrahls (z.B. sanfter Strahl für Cabrioverdeck) für jeweils ein Arbeitsgerät;
- eine automatische und dedizierte Bestimmung einer Reinigungsmittelkonzentration für jeweils ein Arbeitsgerät;
- eine automatische Bestimmung der Wasserqualität, insbesondere des Einsatzes von Osmose-Wasser, für jeweils ein Arbeitsgerät;
- eine Anzeige einer automatisch berechneten Gesamtdauer des konfigurierten Reinigungsprozesses auf der Ein- und Ausgabeeinheit;
- eine Anzeige einer automatisch berechneten Zeitdauer für einen Reinigungsschritt des konfigurierten Reinigungsprozesses an jeweils einem der Arbeitsgeräte;
- insbesondere eine Einstellung der Schaumqualität; die kann z.B. indirekt über eine Konfiguration von Parametern erfolgen.
- eine Einstellung des Volumenstroms für ein Arbeitsgerät, wie z.B. einer Schaumbürste.

Vorzugsweise umfasst die Steuereinheit einen Speicher oder kann auf diesen zugreifen. Im Speicher kann unter anderem der mittels der Steuerlogik berechnete und konfigurierte Reinigungsprozess gespeichert werden. Dies kann vorzugsweise unter Zuordnung einer Benutzeridentifikation erfolgen. Dies bringt den Vorteil, dass der Anwender die von ihm eingegebenen Daten für zukünftige Wäschen ohne erneute Eingaben direkt abrufen kann. Auch können ihm unterschiedliche von ihm bereits ausgeführte Reinigungsprozesse zur Auswahl angeboten werden.

Gemäß einem weiteren Aspekt betrifft die Erfindung eine SB-Fahrzeugwaschanlage wie beansprucht, mit:
- Arbeitsgeräten zur Reinigung, nämlich Bürsten und Lanzen, die mit Energie und Betriebsmitteln (z.B. Reinigungssubstanzen versorgt werden müssen und
- einer Bedienstation mit einer als Benutzerschnittstelle dienenden Ein- und Ausgabeeinheit, wobei auf der Ein- und Ausgabeeinheit eine Auswahl von Konfigurationseinstellungen ausgegeben wird und in Antwort auf die dargestellten (vordefinierbaren) Konfigurationseinstellungen Konfigurationssignale erfasst werden, die an eine Steuereinheit weitergeleitet werden und mit:
- der erfindungsgemäßen Steuereinheit, die dazu bestimmt ist, in Antwort auf die erfassten Konfigurationssignale mittels einer Steuerlogik einen Reinigungsprozess zu konfigurieren und Steuerbefehle für die Arbeitsgeräte zu erzeugen und die Arbeitsgeräte gemäß den erzeugten Steuerbefehlen zu steuern.

Die Bedienstation oder das Bedienterminal ist ein dreidimensionales Bauteil, das eine Benutzeroberfläche umfasst, die zur Ein- und Ausgabe von Signalen dient. Vorzugsweise umfasst die Bedienstation eine Wertmittelaufnahmeeinheit, die zur Aufnahme von Wertmitteln dient und bevorzugt als Münzautomat ausgebildet sein kann. Grundsätzlich ist die erfindungsgemäße Bedienstation nicht auf den Betrieb mit Münzen beschränkt, sondern kann auch mit Wertmitteln anderer Art (Wertmarken, Waschkarten mit einem Magnetstreifen oder sonstigen elektronischen Zugangscodes, RFID-basiert, Banknoten) betrieben werden. Bisher umfasst die Bedienstation ein Display als Anzeigefeld evtl. In Kombination mit einem Kartenleser, mehreren Programmtasten für die vordefinierten festen Waschprogramme und einem numerischen Tastenfeld, einer START und STOP Taste sowie dem Münzautomaten. Erfindungsgemäß umfasst die Bedienstation eine kombinierte Ein- und Ausgabeeinheit, vorzugweise als grafisches User Interface ausgebildet, wie z.B. als Touchscreen, und eine Steuereinheit, die dazu bestimmt ist, die Reinigungsprogramme aufgrund von Eingaben und/oder Signalen zu erzeugen bzw. zu konfigurieren.

Die Ein- und Ausgabeeinheit fungiert als Benutzerschnittstelle. Sie kann in ein Bedienterminal eingebaut sein oder mit diesem in Datenaustausch stehen.

Vorzugsweise handelt es sich um eine grafische Benutzerschnittstelle. Alternativ oder kumulativ können hier jedoch auch andere Arten von Schnittstellen eingesetzt werden, wie z.B. eine akustische Schnittstelle, mit der es möglich wird, dass der Anwender über gesprochene Befehle seine Eingaben tätigt. Bei Verwendung einer grafischen Oberfläche kann beispielsweise ein kapazitiver Touchscreen verwendet werden. Vorzugsweise verfügt der Touchscreen über eine Multi-Sensor-Funktionalität, so dass auch gleichzeitige Berührungen detektiert werden können. Üblicherweise umfasst der Touchscreen neben dem Display (der eigentlichen Anzeigeeinheit) einen Sensor als Eingabeeinheit für Anwendersignale, einen Controller und fakultativ einen Treiber, der in dem Bedienterminal angeordnet sein kann. In einer alternativen und ebenfalls bevorzugten Ausführungsform der Erfindung kann der Touchscreensensor als projiziert-kapazitiver Sensor ausgebildet sein ("PCT" = "Projected Capacitive Touch"). Dabei nutzt der Sensor zwei Ebenen mit einem leitfähigen Muster (beispielsweise Streifen oder Rauten). Die Ebenen sind voneinander isoliert angebracht. Befindet sich ein Finger am Kreuzungspunkt zweier Streifen, so ändert sich die Kapazität des Kondensators, und es kommt ein größeres Signal am Empfängerstreifen an. Diese Signaländerung lässt sich somit genau anhand der X-und Y-Koordinaten messen, wobei auch mehrere Berührungspunkte exakt definierbar sind. Der Stromfluss von den Ecken des Touchscreens zum Berührungspunkt ist proportional zu den XY-Koordinaten. Der wesentliche Vorteil dieses Systems ist, dass der Sensor auf der Rückseite des Deckglases angebracht werden kann, da die Berührungserkennung durch das Glas "hindurchprojiziert" wird. So erfolgt die Bedienung auf der praktisch verschleißfreien Glasoberfläche. Ferner ist die Erkennung von Gesten und mehreren Berührungen (also Multi-Touch) möglich. In anderen Ausführungsform der Erfindung können jedoch auch resistive oder induktive oder andere Sensortechnologien für die Benutzeroberfläche des Bedienterminals zur Anwendung kommen. Die Benutzeroberfläche (auch Monitor genannt) dient zur Ausgabe von spezifisch konfigurierten Waschprogrammen, die auf Basis der Konfigurationssignale erzeugt worden sind. Der Anwender kann die angezeigten Konfigurationen gemäß seinen Wünschen spezifizieren und durch Eingabe eines Konfigurationssignals auswählen. Dabei kann er auch mehrere der angezeigten Optionen bzw. Konfigurationen auswählen. Die Auswahl umfasst mehrere Parameter zur Konfiguration eines Waschprogramms. Auf der Benutzeroberfläche kann auch ein Menü dargestellt werden, das spezifisch und für den Anwendungsfall individualisiert erzeugt wird und mit Hilfe dessen der Anwender durch den Prozess zur Erzeugung seines Waschprogramms geführt wird. Dabei können ihm auch Zusatzinformationen zur Verfügung gestellt werden (z.B. wieviel Energie für die bereits ausgewählten Schritte aufgewendet werden muss und/oder welche Kosten auf ihn zukommen, vor allem aber für den Zweck der Einstellungen und/oder für die automatische Erstellung der Einstellungsvorschläge (Letztere werden in dieser Anmeldung auch als Konfigurationseinstellungen bezeichnet). Die Konfigurationseinstellungen werden automatisch aus Eingangssignalen und Sensorsignalen berechnet.

Die Steuereinheit ist ein elektronisches Bauteil und kann als Software und/oder als Hardware-Bauteil (z.B. als integrierter Schaltkreis, z.B. als FGPA, fieldprogrammable gate array oder in Form einer Mikroprozessorplatine) ausgebildet sein. Sie umfasst eine Steuerlogik. Die Steuerlogik kann entsprechend als Software- oder Hardwaremodul ausgebildet und kann in einem Prozessor implementiert sein. Die Steuereinheit dient zur Ansteuerung der SB-Waschanlage. Die Steuereinheit ist unmittelbar in einem Bauteil der Waschanlage implementiert. Die erfindungsgemäße Steuereinheit steht in einer bevorzugten Ausführungsform der Erfindung mit einer Sensoreinheit in Datenaustausch. Dabei kann es sich vorzugsweise um eine unidirektionale Datenverbindung handeln, über die die Sensoreinheit erfasste Sensordaten an die Steuereinheit sendet. Die Sensordaten repräsentieren einen Zustand des zu reinigenden Fahrzeugs, Teilen davon und/oder technischen Waschbedingungen bzw. einer Waschumgebung, wie z.B. einer Luftfeuchtigkeit, Temperatur, Umweltschutzanforderungen etc. Die Sensordaten werden mittels einer Steuerlogik der Steuereinheit in Steuerbefehle zur zustandsabhängigen Ansteuerung der SB-Waschanlage mit spezifisch konfigurierten bzw. erzeugten Waschprogrammen zur Ausgabe und Auswahl auf einer Benutzeroberfläche umgesetzt.

Die Steuerlogik ist ein Schaltkreis und/oder ein Programm, der/das bestimmt, wie die Konfigurationssignale und ggf. die Eingangssignale, die von unterschiedlichen Sensoren stammen können, verrechnet werden und welche Waschprogramme (diese werden auch als Schritte eines Reinigungsprozesses bezeichnet) jeweils auf Basis der erfassten Inputdaten erzeugt werden sollen.

Die Konfigurationseinstellungen sind eine Menge von technischen Parametern zur Ausführung eines Waschprogramms auf der SB-Waschanlage. Sie können für unterschiedliche technische Parameter jeweils in Form eines Menüs auf der Benutzeroberfläche (als grafischen Ausgaben zur Auswahl durch den Anwender) dargestellt werden. So umfassen die Konfigurationseinstellungen beispielsweise die Eingabe von Daten zur Bestimmung von SOLL-Werten für unterschiedliche Parameter, wie einen Wasserdruck, eine Wassertemperatur etc., einem gewünschten Energie- und/oder Ressourcenverbrauch des Reinigungsvorganges, einer maximalen Zeitdauer für den Waschvorgang etc. Hierzu werden dem Anwender üblicherweise konfigurierbare Eingabefelder mit Vorschlägen bereitgestellt, die er auswählen kann oder er kann direkt eine Eingabe (mittels einer Tastatur oder anderen Eingabemitteln) tätigen. In einer bevorzugten Ausführungsform der Erfindung werden die Eingabefelder mit Vorschlägen, also die Konfigurationsoptionen, die vom Anwender bestimmt werden können, auf Basis von Sensordaten erzeugt. Dies hat den technischen Vorteil, dass die jeweils aktuellen Umgebungsbedingungen für die Wäsche berücksichtigt werden können. Die Sensordaten können aus einem Sensormodul oder von externen Sensoren eingelesen werden.

Erfindungsgemäß handelt es sich bei den Arbeitsgeräten um handbetätigte Reinigungsgeräte, umfassend eine Bürste z.B. eine Schaumbürste - optional mit einem Luftinjektor - und/oder eine Lanze, die als Hochdrucklanze ausgebildet sein kann.

Die SB-Waschanlage kann als Einzelplatzsystem oder als Mehrplatzsystem ausgebildet sein. Im letzteren Fall umfasst die Fahrzeugwaschanlage neben einer zentralen Technikeinheit mit einem Steuermodul mehrere Waschbaugruppen (die vorzugsweise als Waschplätze ausgebildet sind), die alle mit einem lokalen Bedienterminal und lokalen Arbeitsgeräten ausgebildet sind. In einer bevorzugten Ausführungsform der Erfindung umfasst die Waschbaugruppe jeweils eine lokale Steuereinheit. Es kann jedoch auch sein, dass die Steuerung nur von dem zentralen Steuermodul ausgeführt wird. In diesem Fall sind mehrere Instanzen des Steuermoduls vorgesehen, so dass jeder Waschplatz individuell gesteuert werden kann. Eine Waschbaugruppe umfasst vorzugsweise jeweils die Arbeitsgeräte (es können auch unterschiedliche Arbeitsgeräte an den unterschiedlichen Waschplätzen ausgebildet sein) und eine Bedienstation, wobei das zentrale Steuermodul mit der lokalen Steuereinheit in Datenaustausch steht und dazu bestimmt ist, die Waschbaugruppen modular und dediziert anzusteuern. Diese Ausführungsform der Erfindung bietet deutlich mehr Flexibilität sowohl für den Waschanlagenhersteller als auch für den Anwender. So ist es z.B. möglich, die mechanischen Komponenten dediziert für jede Waschbaugruppe bzw. für jeden Waschplatz gezielt zu steuern. So kann beispielsweise ein erster Waschplatz mit einer ersten Reinigungsmittelmischung und ein zweiter Waschplatz - je nach Vorgaben und Konfigurationen des Anwenders - mit einer zweiten, anderen Reinigungsmittelmischung betrieben werden. Dazu werden für jede Waschbaugruppe die jeweils erforderlichen Betriebsmittel bereitgestellt (wie Druckschalter, Ventile, Mischer, Pumpen, Verteiler etc.), die gezielt angesteuert werden in Abhängigkeit von den Konfigurationen des Anwenders. So wird beispielsweise das jeweilige Mischventil der Waschbaugruppe spezifisch gesteuert, um auf dem ersten Waschplatz eine andere Reinigungsmittelkonzentration, Wassertemperatur und/oder einen anderen Wasserdruck bereitstellen zu können als auf einem anderen Waschplatz. Auch hinsichtlich der anderen Parameter kann hier differenziert werden. So können auch unterschiedliche Konzentrationen von Reinigungsmitteln und/oder unterschiedliche Temperaturen auf den einzelnen Waschbaugruppen des Mehrplatzsystems konfiguriert werden. Die Steuerung der Mehrplatz-SB-Waschanlage erfolgt in dieser Ausführungsform der Erfindung somit nicht einheitlich für jeden der Waschplätze übereinstimmend, sondern dediziert, waschplatz-spezifisch und möglicherweise unterschiedlich.

In einer bevorzugten Weiterbildung der Erfindung umfasst die Fahrzeugwaschanlage eine Wertmittelaufnahmeeinheit mit einem Sensor zur Erfassung eines IST-Wertes eines Wertmittelstandes (z.B. Münzeinwurf), wobei die Steuereinheit einen Komparator als elektronische Schaltung, umfasst, der dazu bestimmt ist, den erfassten IST-Wert mit einem SOLL-Wert, der jeweils einem konfigurierten Reinigungsprozess zugeordnet ist, auf Übereinstimmung zu vergleichen und bei Übereinstimmung ein Initialisierungssignal ausgibt, um die Arbeitsgeräte mit den erzeugten Steuerbefehlen zu betreiben.

In einer bevorzugten Ausführungsform der Erfindung ist die Steuereinheit dazu bestimmt, in Antwort auf die erfassten Konfigurationssignale adaptive spezifische Benutzerhinweise und/oder einen SOLL-Wert aus einem Speicher auszulesen und auf der Ein- und Ausgabeeinheit auszugeben. In dem Speicher sind Zuordnungen von Konfigurationseinstellungen in einer Kombination und Benutzerhinweisen und Preisen für die konfigurierte Wäsche (also z.B. {Parameter 1 = ..., Parameter 2 =..., Parameter 4= ..., keine Angabe für Parameter 5} - {Hinweis1, Hinweis 2, Preis xyz als SOLL-Wert}) abgelegt.

Nach einem weiteren Ausführungsbeispiel umfasst die SB-Fahrzeugwaschanlage und insbesondere jeder Waschplatz einen akustischen und/oder optischen Signalgeber, der von der Steuereinheit angesteuert wird, um auf einen bevorstehenden Betriebswechsel der Arbeitsgeräte gemäß dem konfigurierten Reinigungsprozess aufmerksam zu machen. Der akustische Hinweis kann auch mit einem optischen Hinweis auf dem Touchpanel kombiniert werden, indem auf der Benutzeroberfläche eine Step-by-Step-Anleitung zum Betriebswechsel der Arbeitsgeräte oder zur technischen Wirkung des aktuellen und/oder nächsten Arbeitsmittels ausgegeben wird.

Erfindungsgemäß dienen die von der Steuerlogik berechneten Steuerbefehle zur Ansteuerung von Versorgungsaggregaten (wie einem Druckregler, einem Temperaturregler oder anderen technischen Bauteilen, die in der zentralen Technikeinheit angeordnet sind) einer Technikeinheit der Fahrzeugwaschanlage.

Gemäß einem weiteren Aspekt bezieht sich die Erfindung auf ein Verfahren wie beansprucht zur Ansteuerung einer Selbstbedienungs-Fahrzeugwaschanlage mit Arbeitsgeräten und umfasst folgende Verfahrensschritte:
- Nach einer Aktivierung des Systems: Ausgabe von Konfigurationseinstellungen zur Auswahl auf einer Ein- und Ausgabeeinheit;
- Erfassen von Konfigurationssignalen;
- Automatische Konfiguration eines Reinigungsprozesses auf Basis der erfassten Konfigurationssignale;
- Ansteuern der Arbeitsgeräte zur Ausführung des konfigurierten Reinigungsprozesses.

In einer bevorzugten Ausführungsform der Erfindung können folgende Parameter auf der Ein- und Ausgabeeinheit konfiguriert bzw. eingestellt werden:
- Ein Arbeitsdruck eines Druckreglers für eine Pumpe bzw. Einstellung eines Frequenzumrichters für einen Pumpenantrieb,
- eine Temperatur und/oder eine Konzentration des Reinigungsmittels (Einstellung an einer Dosierpumpe, am Hydrominder oder an der Pulverdosiereinheit),
- einen Härtegrad des Wassers,
- einen Fahrzeugtyp,
- eine Zeitdauer des konfigurierten Reinigungsprozesses und/oder eine Zeitdauer von Schritten des konfigurierten Reinigungsprozesses,
- Einstellung der Schaumqualität, z.B. indirekt über eine Konfiguration von anderen Parametern
- Einstellung des Volumenstroms der Schaumbürste oder anderer Arbeitsgeräte

Vorzugsweise wird vor der Initialisierung bzw. Freischaltung der Arbeitsgeräte eine Überprüfung ausgeführt, ob der Anwender auch einen ausreichenden Wertbetrag für die konfigurierte Wäsche hinterlegt hat. Falls nicht, kann ein Hinweis auf der Benutzeroberfläche ausgegeben werden; andernfalls können die Arbeitsgeräte freigeschaltet werden. Dazu umfasst das Verfahren zusätzlich:
- Bestimmen eines dem konfigurierten Reinigungsprozess zugeordneten SOLL-Wertes
- Einlesen eines IST-Wertes eines Sensors einer Wertmittelaufnahmeeinheit
- Vergleich des SOLL-Wertes mit dem eingelesenen IST-Wert und bei Übereinstimmung: Betreiben der Arbeitsgeräte zur Ausführung des konfigurierten Reinigungsprozesses.

In einer vorteilhaften Weiterbildung der Erfindung umfasst das Verfahren als einen ersten Schritt ein Aktivieren des Konfigurationssystems für die Fahrzeugwaschanlage, wobei das Aktivieren das Einlesen von Eingangssignalen und/oder Sensorsignalen umfasst und wobei die auszugebenden Konfigurationseinstellungen in Antwort auf die eingelesenen Eingangssignale und/oder Sensorsignale erzeugt werden. Dies hat den Vorteil, dass nicht nur die Konfigurationswünsche des Anwenders, sondern auch andere technische Daten zur Konfiguration des Reinigungsprozesses verrechnet und berücksichtigt werden können, wie z.B. die Art des Fahrzeugs (Länge, Zweirad, Kraftfahrzeug oder Lastkraftwagen, Cabrio, Kastenform etc.), die aktuellen Umweltbedingungen (Feuchtigkeit, Verschmutzungsgrad etc.). Damit wird es möglich, die Wäsche spezifisch an den aktuellen Zustand anzupassen.

Vorzugsweise werden während einer Betriebszeit der Arbeitsgeräte (also während des Reinigungsprozesses oder in diesbezüglichen Wartezeiten) reinigungsprozessspezifische weitere Konfigurationseinstellungen erzeugt und auf der Eingabe- und Ausgabeeinheit (z.B. in Form von Hinweisen) ausgegeben und in Antwort darauf weitere Konfigurationssignale erfasst und zur veränderten rekursiven Ansteuerung der Arbeitsgeräte verrechnet. Die weiteren Konfigurationssignale können auf Basis von Eingangssignalen und/oder Sensorsignalen erzeugt werden. Beispielsweise kann anhand von Sensoren erfasst werden, dass das Arbeitsgerät zwar aktiviert und benutzbar ist, aber aktuell nicht betrieben wird. Dann könnte ein Hinweis zur Ausgabe auf der Benutzerschnittstelle ausgegeben werden, der den Anwender zur Fortsetzung seines Reinigungsvorganges auffordert oder ihn über die verbleibende Restreinigungszeit informiert.

Bei dem Verfahren erfolgt in Antwort auf die erfassten Konfigurationssignale eine Ausgabe der erfassten Konfigurationssignale (sozusagen als Bestätigung) und/oder des konfigurierten Reinigungsprozesses auf der Eingabe- und Ausgabeeinheit, um den Anwender über ein Bestätigungssignal aufzufordern, die getätigten Eingaben zu bestätigen und/oder den berechneten Reinigungsvorgang zu bestätigen. Andernfalls kann der Anwender seine Eingabe in einer Korrekturschleife korrigieren, um ein modifiziertes Ergebnis zu erhalten.

In einer vorteilhaften Variante ist es vorgesehen, dass die ausgeführten Steuerbefehle während des Betriebs der Arbeitsgeräte überwacht und einer Berechnungseinheit zugeführt werden, die automatisch Kosten für den aktuell ausgeführten Reinigungsprozess berechnet und als SOLL-Wert an die Steuereinheit weiterleitet und auf der Eingabe- und Ausgabeeinheit ausgibt. Dies erweist sich insbesondere dann als sinnvoll, wenn der Anwender während der Reinigung seine Eingaben ändert und noch zusätzliche Reinigungsschritte dazu bucht, so dass sich der Preis erhöht oder weniger Ressourcen beansprucht, was die Kosten senkt. Gemäß einer Variante, würden ihm dann nur die Kosten berechnet, die er auch tatsächlich in Anspruch genommen hat. Anschließend an den Reinigungsvorgang wird automatisch eine erneute Berechnung und Anzeige des Preises ausgelöst.

In einer Ausführungsvariante umfasst die SB-Waschanlage und vorzugsweise die zentrale Technikeinheit eine Sensoreinheit, die ihrerseits mehrere Sensormodule beinhalten kann. Die Sensormodule umfassen ihrerseits mehrere Sensoren. Die Sensormodule können stationär und dauerhaft an zumindest einem Bauteil oder vorübergehend (z.B. an dem Fahrzeug) befestigt sein. Die Sensormodule und/oder die Sensoren sind vorzugsweise an unterschiedlichen Positionen vorgesehen. Die Sensoren und/oder die Sensormodule können an der Waschanlage selbst, an Bauteilen der Waschanlage und/oder an den jeweiligen Schnittstellen zwischen Bauteil und Waschanlage verbaut sein. Vorzugsweise sind die Sensoren und/oder die Sensormodule jedoch nicht an der Waschanlage oder an deren Bauteilen angeordnet, sondern extern von der Waschanlage. Sie befinden sich somit außerhalb der Waschanlage. Die Sensoren und/oder die Sensormodule können temporär am zu reinigenden Fahrzeug und/oder an einem Bedienterminal ausgebildet sein. Darüber hinaus ist das Sensormodul in der bevorzugten Ausführungsform der Erfindung mit einer Empfangseinheit ausgebildet, die dazu dient, Sensordaten von externen Signalgebern oder externen (z.B. zentralen) Servern einzulesen. So kann die Sensoreinheit ausgebildet sein, Wetterdaten von einem Server eines Wetterdienstes zu erfassen. Dabei kann es sich um aktuelle lokale Wetterdaten an der geographischen Position des Waschortes als auch um Prognosedaten handeln. Die Sensoren sind vorzugsweise als Sensoren unterschiedlichen Sensortyps verbaut und umfassen neben optischen Sensoren, akustische Sensoren, Feuchtigkeitssensoren, Positions- und/oder Näherungssensoren, Temperatursensoren, Hallsensoren und anderen Sensortypen auch Schalter, Taster und/oder Potentiometer etc.

Die Sensoren dienen zur Erfassung von analogen und/oder digitalen Signalen. Bei den erfassten Signalen kann es sich um diskrete Messwerte (z.B. Temperatur) oder um kontinuierliche Sensorsignale (z.B. Temperaturentwicklung über die Zeit) handeln.

Der Reinigungsprozess umfasst mehrere Schritte, die auch an unterschiedlichen Arbeitsgeräten und, die sequentiell oder parallel ausgeführt werden können. Die Waschprogramme sind damit eine Sammlung unterschiedlicher Reinigungsprozessschritte oder Reinigungsschritte, die zu einem Waschvorgang kombiniert werden können, beispielsweise insbesondere:
- Eine Felgen-Wäsche unter Verwendung von konfigurierbaren Reinigungsmittel(n)
- Eine Insektenreinigung mit einer automatisch vorgeschlagenen und konfigurierbaren Einwirkzeit des ebenfalls konfigurierbaren Insektenreinigungsmittels
- Eine Politur mit einem konfigurierbaren oder auswählbaren Politurmittel
- Eine berührungslose Vorwäsche mit Wasser oder anderen Medien in konfigurierbarer Qualität, Dauer und/oder konfigurierbarem Energieverbrauch
- Eine auf einen auswählbaren Wert konfigurierbare Einwirkzeit eines Reinigungsmittels
- Eine auf einen auswählbaren Wert konfigurierbare Dauer eines Reinigungsschrittes
- Eine auf einen auswählbaren Wert konfigurierbare Dauer des gesamten Waschvorganges
- Eine Oberflächenversiegelung mit einem auswählbaren Versiegelungsmittel.

Die jeweiligen Konfigurationen werden über Konfigurationssignale auf der Benutzeroberfläche erfasst. Dazu können Konfigurationsmenüs zur Auswahl von bestimmten Konfigurationen ausgegeben werden, unter denen der Anwender dann eine oder mehrere der angebotenen Konfigurationen auswählen kann.

Erfindungsgemäß sind die Waschprogramme nicht mehr vorkonfiguriert (z.B. "Schnellwäsche", "Intensivwäsche", "Schaumwäsche"), sondern der Anwender kann sich die Schritte selbst konfigurieren. Dazu werden ihm auf einer Benutzeroberfläche Konfigurationseinstellungen zur Auswahl angeboten, in Form von Auswahlmenüs für die Einstellung der Einwirkzeit eines Reinigungs- oder Pflegemittels und/oder für die Dauer und/oder Intensität des Waschprogrammes etc. Dabei kann ein ausgewählter Reinigungsschritt bzw. Waschprogrammabschnitt auch mehrfach ausgewählt werden, so dass er in Folge zur Anwendung kommt. Auf Basis der ausgewählten Konfigurationseinstellungen (z.B. lange Einwirkzeit, hochwertige Produkte) erfolgt dann situationsangepasst die Berechnung der spezifisch konfigurierten Reinigungsschritte (z.B. "Intensivwäsche - hohe Qualität") und deren Ausgabe auf der Benutzeroberfläche.

In einer vorteilhaften Weiterbildung der Erfindung ist die Steuerlogik der Steuereinheit dazu ausgebildet, aus den empfangenen Konfigurationssignalen, Eingangssignalen und/oder Sensorsignalen einen Zustand zu ermitteln und diesen mit einem in einem Speicher abgelegten Referenz-Zustand zu vergleichen, um eine zustandsabhängige Berechnung der Waschprogrammschritte auszuführen. Durch den Abgleich mit Referenzwerten, die in einer zentralen Datenbank hinterlegt sein können, kann die Steuerungsaufgabe beschleunigt durchgeführt werden.

Gemäß einer bevorzugten Ausführungsform der Erfindung umfasst die Steuerlogik ein Optimierungsmodul, das den konfigurierten und berechneten Reinigungsprozess hinsichtlich einer Dosierung von Reinigungsmitteln, eines Wasserverbrauchs und/oder hinsichtlich eines Energieverbrauchs optimiert. Optional kann im Vorfeld konfiguriert werden, dass hier noch andere Optimierungskriterien berücksichtigt werden können, wie z.B. eine Optimierung in Hinblick auf die Kosten und/oder die Dauer des Waschvorganges etc. Erfindungsgemäß kann das Steuermodul zustandsspezifische Vorschläge zur Optimierung erzeugen. In einer bevorzugten Ausführungsform der Erfindung können die Optimierungskriterien im Vorfeld in einer Definitionsphase zum Konfigurieren der Steuereinheit konfiguriert werden. Um inkonsistente und konfligierende Eingaben zu vermeiden kann es in einer Weiterbildung der Erfindung vorgesehen sein, die getätigten Eingaben des Anwenders auf Konsistenz zu überprüfen und gegebenenfalls Korrekturvorschläge anzubieten und Korrektureingaben einzufordern, falls der Anwender z.B. auswählt, dass eine schnelle Wäsche mit wenig Energie und kurzer Zeit durchgeführt werden soll. Dabei kann auch ein Warnhinweis auf der Benutzeroberfläche mit weiteren Informationen ausgegeben werden. Es können auch Zusatzinformation zu den mit der Auswahl des Anwenders verbundenen Folgen ausgegeben werden, z.B. zu den mit der Auswahl des Anwenders einhergehenden Kosten oder der mit der Auswahl der Reinigungsprozessschritte verbundenen Zeit und/oder des Energieverbrauchs. Auf Basis dieser Daten, wird dann eine Korrekturoption auf der Benutzeroberfläche bereitgestellt, mit der der Anwender seine bisherigen Eingaben revidieren kann,

Gemäß einer weiteren, bevorzugten Ausführungsform der Erfindung umfasst die Steuerlogik ein Konfigurationsmodul, das die berechneten Waschprogrammabschnitte hinsichtlich vorgebbarer und anwender-individueller Kriterien konfiguriert. Hier kann z.B. definiert werden, dass ein Anwender X bei einem Fahrzeug Y stets einen bestimmten Waschvorgang ausgeführt haben möchte und/oder dass er stets den Waschvorgang hinsichtlich einer Ressourceneinsparung von Wasser und Energie optimiert haben möchte. Diese benutzer-spezifischen Einstellungen werden in einem Speicher abgelegt und können somit für spätere Waschvorgänge für denselben Nutzer X und/oder für dasselbe Fahrzeug Y zur Bestätigung abgerufen werden. Der Speicher kann ein mobiler Speicher in Form einer Transponderkarte oder ein stationärer Speicher, z.B. in Form einer Datenbank sein.

Gemäß einer weiteren, bevorzugten Ausführungsform der Erfindung umfasst die Sensoreinheit - wie vorstehend erwähnt - mehrere Sensoren, die unterschiedliche physikalische Messwerte eines Fahrzeugs und/oder einer Waschumgebung erfassen, insbesondere einen Temperatursensor, einen Zeitsensor (z.B. in Form einer Uhr), einen Luftfeuchtigkeitssensor, einen Sensor zur Erfassung einer Fahrzeuggröße und/oder eines Fahrzeugverschmutzungsgrades. In einer alternativen Ausbildung kann auch ein Touchkey oder ein anderes Eingabefeld auf der Benutzerschnittstelle bereitgestellt werden, über das der Anwender die Daten, die der Sensor automatisch erfasst, manuell bestätigt oder die Daten direkt eingibt. Die Sensoreinheit weist in der Regel zumindest einen und vorzugsweise mehrere Sensoren an unterschiedlichen Bauteilen und/oder Positionen in der Regel und bevorzugt außerhalb Fahrzeugwaschanlage auf. Die Sensoreinheit kann auch mit externen Sensoren (z.B. am Fahrzeug und/oder auf einem entfernten Server, wie beispielsweise einer Wetterstation) in Datenaustausch stehen.

Die vorstehend beschriebene konfigurierbare Ansteuerung einer SB-Fahrzeugwaschanlage ist komplexer als bisher, da eine Vielzahl von Daten aus unterschiedlichen Quellen berücksichtigt werden müssen. Deshalb ist es vorgesehen, dass die konfigurationssignalbasierte Steuerungsfunktion wahlweise über einen Schalter aktivierbar und deaktivierbar ist. Wenn sie deaktiviert ist, wird die Steuerung auf Basis von vorkonfigurierten Programmmodulen - wie bisher - und nicht auf Basis von Konfigurationsdaten ausgeführt.

Die einzelnen Einheiten sind, wie vorstehend beschrieben, elektronische Module, die über einen geeigneten Kommunikationskanal in Datenaustausch stehen, vorzugsweise über eine drahtlose Netzwerkverbindung oder über ein Mobilfunknetz, Bluetooth oder eine NFC-Schnittstelle. Selbstverständlich können die Einheiten auch mit einem zentralen Server oder einer Datenbank verbunden sein, beispielsweise über eine WLAN, LAN oder eine andere geeignete Verbindung.

Auch werden die ausgeführten Steuerbefehle in einem Speicher abgelegt, um für spätere Berechnungen verwendbar zu sein. Das hat den Vorteil, dass der Anwender bei Bedarf immer wieder auf sein spezifisch nach seinen Vorgaben konfiguriertes Waschprogramm zugreifen kann. Dazu wird in einer Datenbank eine Zuordnung zwischen dem Anwender oder einem diesen identifizierenden Datensatz und den erzeugten Steuerbefehlen und/oder seinen Konfigurationssignalen gespeichert.

Ein weiteres bevorzugtes Ausführungsbeispiel ist darin zu sehen, dass Teile der Steuereinheit auf ein externes (vorzugsweise mobiles) Endgerät ausgelagert werden können. Bei dem externen Endgerät kann es sich z.B. um ein Smartphone, Tablet oder um ein PDA-Gerät (personal digital assistant) handeln, das der Anwender bei sich trägt und auf dem eine Applikation geladen und ausgeführt werden kann, um die SB-Anlagenbetrieb für den jeweiligen Anwender zu konfigurieren und zu steuern. In einer Weiterbildung ist es auch möglich, dass das erfindungsgemäße Verfahren nur über das Bedienterminal ausgelöst wird (z.B. durch eine Benutzerinteraktion) und dann vollständig über das mobile Endgerät abgewickelt bzw. ausgeführt wird. Darüber hinaus können die Anwender-individuellen Einstellungen und Konfigurationen auch direkt in dem separaten, dem jeweiligen Anwender zugeordneten Gerät (Handy) lokal gespeichert werden, um später für weitere Wäschen wieder abrufbar zu sein. Dies hat den Vorteil, dass keine sicherheitskritischen Netzwerkgrenzen überwacht werden müssen, da die Datenhaltung lokal an einem Gerät des Anwenders erfolgt. Des Weiteren können alle Signale, die sich während des Betriebs der Arbeitsgeräte an den Anwender richten (um ihn z.B. zu einem Wechsel des Arbeitsgerätes auffordern oder zu einem Übergang zu einem nächsten Reinigungsschritt an demselben Arbeitsgerät) nicht nur oder nicht mehr an der Bedienstation der Waschbaugruppe angezeigt werden, sondern direkt an seinem mobilen Endgerät. Das Signal kann als akustisches, optisches und/oder auch in anderer Form, z.B. vorteilhafterweise als Vibrationssignal, ausgegeben werden. Dies hat den Vorteil, dass der Anwender über den Wechsel von einem Reinigungsprozessschritt zu einem bevorstehenden, nächsten Schritt unterrichtet werden kann, ohne dass er seine Aufmerksamkeit gezielt auf ein Display oder ein akustisches Signal richten muss. Zusätzlich kann auch eine zentrale Speicherung der Anwender-individuellen Konfigurationen vorgenommen werden. Dies kann vorteilhafterweise über die Zuordnung über eine eineindeutige Identifikationskennzahl ausgeführt werden (z.B. mittels einer International Mobile Subscriber Identity (IMSI).

Ein wichtiger Vorteil der Erfindung liegt darin, dass dem Anwender auch während der SB-Wäsche unter Betrieb der Arbeitsgeräte Informationen zugeleitet werden können, die den aktuellen Zustand des konfigurierten Reinigungsprozesses bzw. der Wäsche kennzeichnen. So kann z.B. - wie oben bereits erwähnt - ein Wechsel eines Arbeitsgerätes oder ein Bedienwechsel auf demselben Arbeitsgerät (z.B. Umschaltung von Spülvorgang auf Wachsauftrag auf derselben Lanze) angezeigt werden, optional mit weiteren Meta-Informationen (z.B. wieviel Zeit und/oder Energie der Schritt beansprucht, welches Reinigungsmittel Verwendung findet etc.).

Ein weiterer wichtiger Aspekt ist darin zu sehen, dass der Anwender auch während der Ausführung der von ihm individuell konfigurierten Wäsche Änderungseinstellungen (z.B. Zusatzbuchung(en) von weiteren Reinigungsschritten und/oder Wechsel auf alternative Reinigungsschritte etc.) eingeben und unmittelbar zur Anwendung bringen kann (indem diese zur Steuerung der Fahrzeugwaschanlage verwendet werden).

Eine weitere Aufgabenlösung besteht in einem Computerprogrammprodukt, das in einen internen Speicher eines digitalen Computers einer SB-Fahrzeugwaschanlage geladen werden kann und Softwareroutinen umfasst, mit denen die Schritte des oben beschriebenen Verfahrens ausgeführt werden, wenn die Softwareroutinen auf dem digitalen Computer ausgeführt werden.

Eine weitere Aufgabenlösung sieht ein Computerprogramm vor zur Durchführung aller Verfahrensschritte des oben näher beschriebenen Verfahrens, wenn das Computerprogramm auf einem Computer oder einem elektronischen Gerät ausgeführt wird. Dabei ist es auch möglich, dass das Computerprogramm auf einem für den Computer oder das elektronische Gerät lesbaren Medium gespeichert ist.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- Fig. 1: zeigt in einer schematischen Übersichtsdarstellung eine Selbstbedienungs-Fahrzeugwaschanlage in einem Ausführungsbeispiel mit vier oder mehr Waschplätzen, die über eine erfindungsgemäße Steuereinheit gesteuert wird.
- Fig. 2: ist eine schematische Darstellung einer erfindungsgemäßen Steuereinheit mit Instanzen auf einer Technikeinheit und einer Bedieneinheit, die in Datenaustausch stehen
- Fig. 3: ist ein Ablaufdiagramm gemäß einer bevorzugten Ausführungsform der Erfindung
- Fig. 4.: ist eine schematische Darstellung einer Technikeinheit für Waschplätze einer Selbstbedienungsfahrzeugwaschanlage gemäß einem Ausführungsbeispiel und
- Fig. 5: ist eine detailliertere Darstellung von Pumpen der Technikeinheit zur Steuerung der unterschiedlichen Waschplätze gemäß einem Ausführungsbeispiel.

### Detaillierte Beschreibung der Figuren

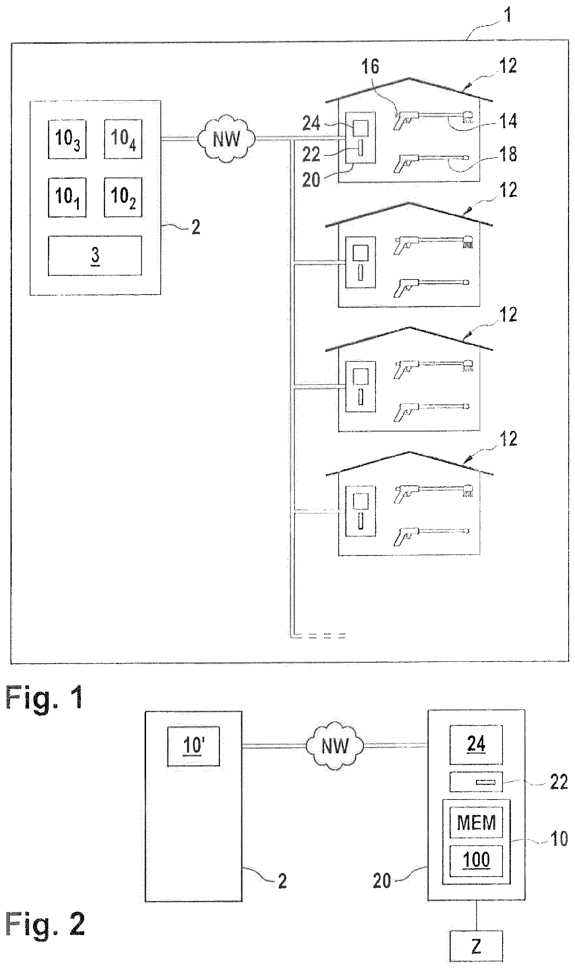

Im Folgenden wird die Erfindung anhand von Ausführungsbeispielen im Zusammenhang mit den Figuren näher beschrieben. Die Erfindung betrifft die Konfiguration einer Fahrzeugwaschanlage 1, die als Selbstbedienungs-Fahrzeugwaschanlage (SB-Waschanlage) ausgebildet und schematisch in Figur 1 dargestellt ist.

**Fig. 1** zeigt eine schematische Ansicht einer SB-Waschanlage 1 mit unterschiedlichen Baueinheiten, insbesondere mit einer Technikeinheit 2 und vier oder mehr Waschplätzen, die auch als Waschbaugruppe 12 bezeichnet sind. Eine Waschbaugruppe 12 umfasst einen Bedienautomaten bzw. eine Bedienstation 20 und die in der Waschbaugruppe 12 bereitgestellten Arbeitsaggregate bzw. Arbeitsgeräte, insbesondere eine Schaumbürste 14, die einen Luftinjektor 16 umfassen kann. Neben den Bürsten werden Lanzen 18 eingesetzt, die als Hochdrucklanzen (HD-Lanze) ausgebildet sein können. Auch ist es möglich, eine HD-Lanze mit einer Schaumlanze zu kombinieren; diese wird dann als Umschaltlanze bezeichnet. Weiterhin können auch nur Schaumlanzen vorgesehen sein. Und dann noch Bürsten In anderen Ausführungsformen der Erfindung können hier andere oder zusätzliche Arbeitsgeräte bereitgestellt werden. Die Arbeitsgeräte werden vorzugsweise manuell bedient und über ein zentrales Steuermodul 3 der Technikeinheit 2 angesteuert. Die Bedienstation 20 umfasst eine Ein- und Ausgabeeinheit 20, die insbesondere eine grafische Benutzeroberfläche umfasst und als Touchpad oder Touchdisplay ausgebildet sein kann. Des Weiteren umfasst die Bedienstation 20 eine Wertmittelaufnahmeeinheit 22, die dazu bestimmt ist, Wertmittel aufzunehmen. Es kann sich um eine Münzeinwurfstation handeln, die eine Sensoreinheit zur Erfassung des eingeworfenen Münzbetrages umfasst. Alternativ oder kumulativ kann es sich um ein bargeldloses Zahlsystem handeln, bei dem Zugangscodes erfasst und einem Konto und/oder einem Kreditkarteninhaber zugeordnet werden (z.B. ein Codex-System). Auch hier ist eine Sensoreinheit vorgesehen, die den gebuchten bzw. verfügbaren Betrag erfasst. Die Daten können über beliebige drahtlose Datenübertragungsprotokolle übertragen werden.

Das zentrale Steuermodul 3 der Technikeinheit 2 steht über ein Netzwerk NW mit den Waschbaugruppen 12 in Datenaustausch. Jeweils eine der Waschbaugruppen 12 mit deren Arbeitsgeräten 14, 16, 18 wird erfindungsgemäß über eine (lokale) Steuereinheit 10 gesteuert. Die Steuereinheit 10 kann als verteiltes System ausgebildet sein und auf der Technikeinheit 2 und/oder auf der Waschbaugruppe 12 oder deren Bedienstation 20 ausgebildet sein. In Figur 1 sind deshalb vier Instanzen 10₁, 10₂, 10₃ und 10₄ der Steuereinheit 10 dargestellt. Dabei dient eine Steuereinheit 10 zur Steuerung von allen Arbeitsgeräten 14, 16, 18 eines Waschplatzes. Dazu kann die Steuereinheit 10 ein Steuermodul in Form eines elektronischen Bausteins (z.B. FPGA) umfassen oder eine Applikation in Form von Software.

In einer Ausführungsform der Erfindung umfasst die Steuereinheit 10 eine Eingangsschnittstelle, eine Steuerlogik 100 und eine Ausgangsschnittstelle. Wie unter Bezugnahme auf **Figur 2** näher beschrieben, können mehrere Instanzen der Steuereinheit 10 ausgebildet sein: Eine zentrale Instanz 10' (in der zentralen Technikeinheit 2 oder zumindest dieser zugeordnet) und eine lokale Instanz 10 auf der Waschbaugruppe 12 (oder dieser zugeordnet). Letztere dient dazu, die lokale Steuerung des Waschplatzes auszuführen und die dort verfügbaren Betriebsmittel anzusteuern. Andernfalls kann das zentrale Steuermodul 3 mit den lokalen Steuereinheiten 10 des Waschplatzes bzw. der Waschbaugruppe 12 zur Ausführung der Ansteuerungsaufgaben für die Betriebsmittel und deren Versorgungsaggregaten in Datenaustausch stehen.

Vorzugsweise umfasst die Steuereinheit 10 einen lokalen Speicher MEM zur Datenspeicherung. Dabei können in dem Speicher MEM sowohl Steuerbefehle, ausgeführte Steuerbefehle, ausgegebene Konfigurationseinstellungen und/oder erfasste Konfigurationssignale sowie konfigurierte Reinigungsprozesse - insbesondere unter Zuordnung zu einem Anwender mit einer eineindeutigen Anwenderkennung - hinterlegt sein. Weiter umfasst die Steuereinheit 10 eine Steuerlogik, insbesondere eine elektronische Steuerlogikschaltung 100. Die Steuereinheit 10 steht in Datenaustausch mit der Waschanlage 1, mit der Technikeinheit 2 und optional mit einer Sensoreinheit S, die sich üblicherweise in oder an der Waschbaugruppe 12 befinden wird, und mit einer Ein- und Ausgabeeinheit 24, die als Benutzerschnittstelle - vorzugsweise in Form eines Bedienterminals - für den Anwender dient. Die Steuereinheit 10 kann auch in Datenaustausch mit einem zentralen Server Z stehen, auf dem ebenfalls Waschdaten und/oder Anwenderdaten (z.B. Konfigurationen von zurückliegenden Wäschen) verfügbar sind. Der Server Z kann über ein öffentliches Netzwerk, wie das Internet zugreifbar sein.

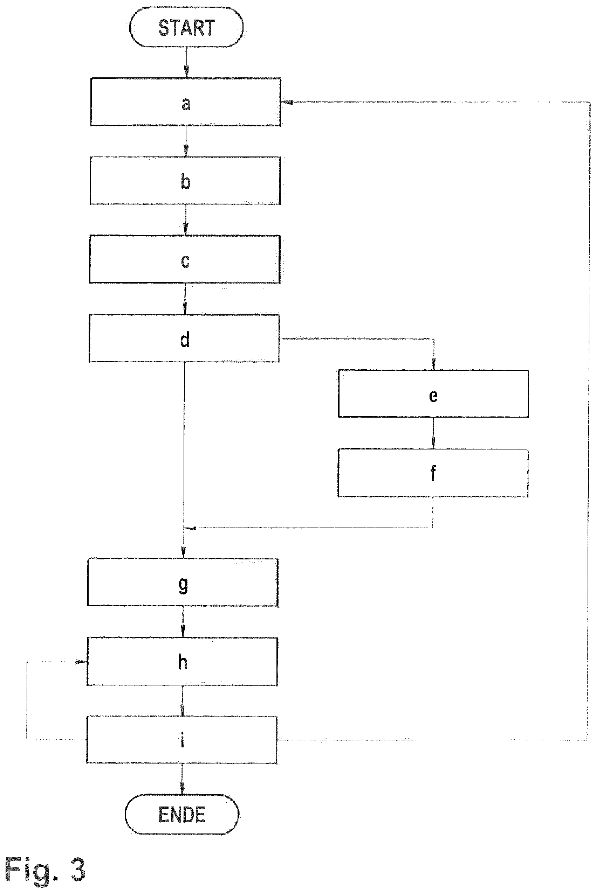

**Figur 3** zeigt ein Ablaufdiagramm gemäß einer bevorzugten Ausführung der Erfindung. Nach dem Start des Verfahrens wird in **Schritt a** eine Auswahl von Konfigurationseinstellungen auf dem Touchdisplay 24 ausgegeben. Dabei handelt es sich nicht um vorkonfigurierte, feste Waschprogramme wie im Stand der Technik (z.B. Hochdruckwäsche, Aktivschau, Klarspülen, Glanzspülen), sondern um Parameter mit denen es möglich wird, die Wäsche zu konfigurieren. In **Schritt b** werden auf der Benutzeroberfläche die Benutzereingaben als Konfigurationssignale erfasst. Dies kann durch Auswahl von angebotenen Menüpunkten eines Menüs erfolgen. In **Schritt c** wird der Reinigungsprozess auf Basis dieser Vorgaben des Anwenders mit seinen Konfigurationseinstellungen konfiguriert. Dies erfolgt in der Steuerlogik 100 und kann zusätzlich unter Zugriff auf eine Datenbank oder einen zentralen Server Z ausgeführt werden. In **Schritt d** wird ein Preis für die konfigurierte Wäsche berechnet und als SOLL-Wert bereitgestellt. Die Berechnung des Preises kann unter Zugriff auf eine Datenbank ausgeführt werden, in der Zuordnungen von Waschprozessen und Preisen abgelegt sind. In einer bevorzugten Ausführung der Erfindung erfolgt in **Schritt e** das Ausgeben des Preises und des konfigurierten Waschprogramms auf dem Touchpanel 24. In **Schritt f** wird ein Bestätigungssignal vom Anwender erfasst. Schritte e und f sind allerdings fakultativ. Daraufhin wird in **Schritt g** und **Schritt h** überprüft, ob der Anwender auch einen ausreichenden Geldbetrag bereitgestellt hat. Bejahendenfalls wird bei Übereinstimmung zwischen SOLL-Wert und erfassten IST-Wert ein Betrieb der Arbeitsgeräte 14 - 18 ausgelöst bzw. aktiviert. Der Anwender kann in **Schritt i** mit seiner Wäsche beginnen. Er wird dabei über das Bedienpanel 24 durch die von ihm konfigurierte Wäsche geführt. Zusätzlich können für jeden Schritt des Reinigungsprozesses Hinweise auf dem Bedienpanel 24 ausgegeben werden, die Zusatzinformationen bereitstellen können (z.B. wieviel Zeit ihm noch verbleibt, wieviel Energie gerade verbraucht wird, welcher nächste Schritt ansteht etc.). Danach kann das Verfahren enden oder für den nächsten Anwender wiederholt ausgeführt werden.

So kann unter anderem konfiguriert werden, welches der in der Fahrzeugwaschanlage 1 bzw. in der Waschbaugruppe 12 verbauten Arbeitsgeräte in welchem Zeitraum für den Reinigungsprozess betrieben werden sollen (z.B. nur die Hochdrucklanze 18 und kein Trocknungsaggregat) und/oder wie bzw. in welcher Form sie betrieben werden sollen. Folgende Konfigurationen sind z.B. möglich:
- mit welchem Reinigungsprodukt das jeweilige Arbeitsgerät beschickt werden soll,
- in welcher Form das Reinigungsprodukt appliziert werden soll: z.B. geschäumt oder nicht geschäumt. Wird das Produkt beispielsweise in geschäumter Form appliziert, dann ist die Oberflächenhaftung erhöht. Dies hat wiederum Einfluss auf die Einwirkzeit (hier: längere Einwirkzeit)
- wie hoch die Konzentration des Reinigungs- und/oder Pflegemittels sein soll. Z.B. bei Detektion einer Feuchtigkeit auf der Fahrzeugoberfläche muss eine höhere Dosierung eines Vorreinigers angewendet werden, um eine bestimmte/gewünschte Dosierung zu erhalten. Dies wird automatisch erfasst und das Vorreinigeraggregat wird entsprechend angesteuert.
- Welche Wasserqualität angewendet werden soll. So kann es konfiguriert werden, ob Frischwasser in hoher Qualität oder Wasser aus einem gespeicherten Vorratskreislaufsystem mit niedrigerer Qualität oder Wasser in aufbereiteter Form (z.B. in enthärteter Form als Osmose-Wasser) verwendet werden soll.
- In welcher Qualität die Reinigungs- und/oder Pflegemittel an den jeweiligen Arbeitsgeräten verwendet werden soll (z.B. auf einem ersten Arbeitsgerät (Bürste) in einer hochwertigen Form und auf einem zweiten Arbeitsgerät (Lanze) in niedrigwertiger Form). Dabei können die einzelnen Arbeitsgeräte (Bürsten, Sprühsysteme etc.), die innerhalb ein und desselben Waschprozesses angewendet werden auch unterschiedliche konfiguriert werden.

Zum Beispiel kann der Anwender nach der Konfiguration seines Waschprozesses, das erste Arbeitsgerät 14 aufnehmen und sein Fahrzeug z.B. mit der Powerschaumlanze einschäumen, um den Schmutz anzulösen. Optional kann hier eine Einwirkzeit konfiguriert werden (z.B. auf einen vom Anwender bestätigten Vorschlag des Systems, der automatisch erzeugt wird, z.B. über einen Datenbankzugriff), was zur Folge hat, dass dem Anwender über ein Ausgabesignal (akustisch, optisch oder Vibration) signalisiert wird, wenn die Einwirkzeit abgelaufen ist und er mit dem Abwaschen oder dem nächsten Reinigungsschritt beginnen kann. Dann erfolgt gemäß dem konfigurierten Reinigungsprozess eine Umschaltung auf ein anderes Arbeitsgerät, nämlich auf die Bürstenlanze 18. Dazu kann dem Anwender ein Vibrationssignal über sein Smartphone übermittelt werden, zusätzlich zu einer grafischen Ausgabe (auf dem Smartphone und/oder auf dem Bedienterminal), dass 20 Sekunden Pause für den Arbeitsgerätewechsel vorgesehen sind. Daraufhin kann der Anwender die Bürstenlanze 18 in dem konfigurierten Zeitintervall betreiben, um den Schmutz mechanisch anzulösen. Optional können hier optische Sensoren vorgesehen sein, die den Zustand des Reinigungsprozesses erfassen. Die Signale der Sensoren werden der Steuereinheit 10 zugeführt, die die weitere Steuerung auf Basis der erfassten Signale durchführt. Zum Beispiel kann dem Anwender mitgeteilt werden, dass der Schmutz noch nicht ausreichend gelöst ist, und dass deshalb vorgeschlagen wird, eine Verlängerung des aktuellen Reinigungsschrittes dazu zu buchen. Dazu erhält der Anwender auf der Benutzeroberfläche mit einem erzeugten entsprechenden Bedienfeld die Gelegenheit. Dies kann auch auf dem mobilen Endgerät des Anwenders ausgeführt werden, das in Datenaustausch mit der Steuereinheit 10 und/oder mit dem Steuermodul 3 steht. Daraufhin kann auf die HD-Lanze umgeschaltet werden. Dies kann über ein akustisches Signal signalisiert werden. Daraufhin kann der Anwender über einen Zeitraum von 2 Minuten die HD-Lanze mit einem Shampoo bedienen, um dann auf die HD-Wäsche mit entsalztem Wasser/CTH zum Nachspülen ohne Lanzenwechsel überzugehen. Dieser Vorgang kann über ein optisches Signal gekennzeichnet werden.

Grundsätzlich ist es bevorzugt, dass die unterschiedlichen Wechsel im Reinigungsprozess (mit oder ohne Wechsel des Arbeitsgerätes) jeweils durch unterschiedliche Signalgebung (z.B. anderer Signaltyp: akustisch/Vibration/optisch oder gleicher Signaltyp aber anderes Signal: andere Farbe/anderes Vibrationsmuster/andere Frequenz) gekennzeichnet werden. Dies hat den Vorteil, dass der Anwender den jeweiligen Wechsel leichter und intuitiver erfassen kann.

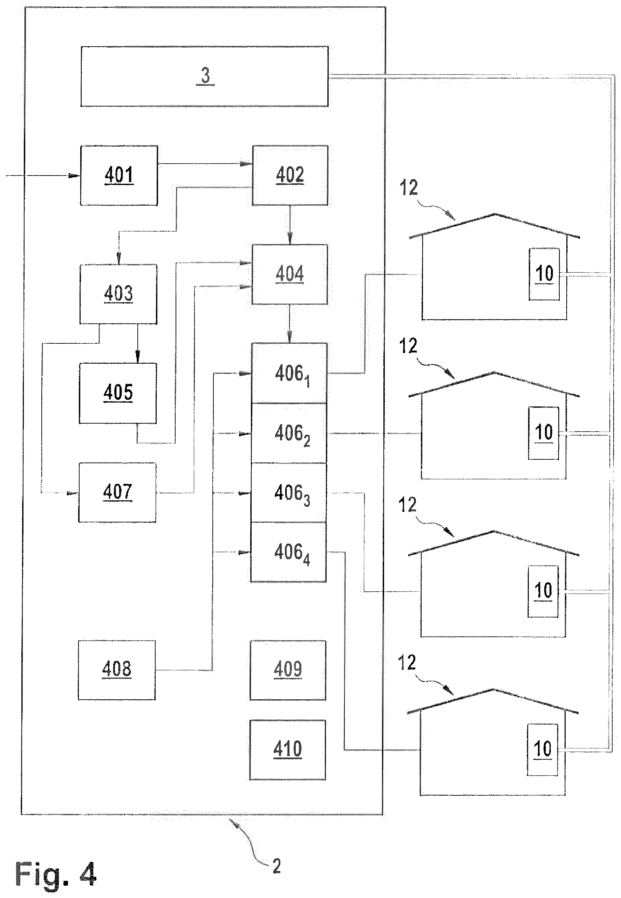

**Figur 4** ist eine weitere Übersichtsdarstellung von Bauteilen der Technikeinheit 2. Diese umfasst in diesem Ausführungsbeispiel einen Vorlagenbehälter mit Netztrennung und Wasseruhr 401, einen Ausgleichsbehälter und eine Druckerhöhungspumpe 402, eine Enthärter Anlage 403, einen Verteiler 404, eine Heizung 405, eine Pumpeneinheit 406, die eine Anzahl von Pumpen umfasst entsprechend der Anzahl von Waschbaugruppen oder Waschplätzen 12 (in diesem Fall. Vier). Weiterhin umfasst die Technikeinheit 2 eine Osmose Anlage 407, eine Chemieversorgung 408 sowie eine Frostschutzeinheit 409 und einen Heizlüfter 410. Wie in Figur 4 gezeigt sind hier vier Einheiten der Pumpe 406 vorgesehen, die jeweils individuell die Arbeitsgeräte des jeweiligen Waschplatzes steuern. In komplexeren Ausführungsform der Erfindung können auch die anderen Bauteile der Technikeinheit 2 spezifisch für die jeweiligen Waschplätze vorgesehen sein, also eine erste Chemieversorgungseinheit für den ersten Waschplatz, eine zweite Chemieversorgungseinheit für den zweiten Waschplatz etc. Gleiches gilt für Ausgänge von anderen Bauteilen, wie der Enthärtungsanlage 403 und weiteren Elementen. Im letzteren Fall ist es nicht notwendig, das Bauteil selbst mehrfach auszubilden, sondern die Steuerung erfolgt derart, dass die Waschplätze individualisiert gespeist (z.B. mit enthärtetem Wasser, mit warmen oder Frischwasser) werden können.

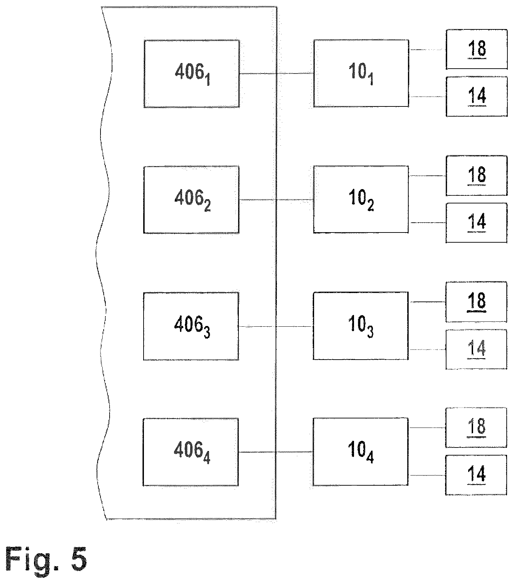

**Figur 5** zeigt nochmals detailliert, dass eine waschplatz-spezifische und sogar arbeitsgeräte-spezifische Ansteuerung möglich wird, indem das Steuermodul 3 beispielsweise mit den unterschiedlichen Pumpen 406 zusammenwirkt, um die HD-Lanze mit einem anderen Druck beaufschlagen zu können als die Schaumbürste. Dies ist allerdings nur ein Beispiel; das Steuermodul 3 kann auch mit anderen mechanischen oder technischen Betriebsmitteln und Versorgungsaggregaten der Waschanlage zusammenwirken, um eine Steuerung der einzelnen Waschplätze zu bewirken. Durch die freie Konfigurierbarkeit kann ein wesentlich höherer Flexibilitätsgrad erzielt werden. Es kann somit nicht nur zwischen vorkonfigurierten Programmen ausgewählt werden, sondern die Programme können nach den individuellen Vorgaben des Anwenders erst dynamisch und adaptiv an den Fall angepasst erstellt und konfiguriert werden und dies auch unterschiedliche für die jeweiligen Waschplätze. Die lokale Steuereinheit 10 kann der jeweiligen Waschbaugruppe 12 zugeordnet sein oder sie kann Bestandteil der Waschbaugruppe 12 sein. In einer weiteren Ausführungsform der Erfindung kann die Steuereinheit 10 auch für die unterschiedlichen Waschbaugruppen 12 auf einem zentralen Server Z und/oder auf einem zentralen Steuermodul 3 gehostet werden.

In einer bevorzugten Ausführungsform der Erfindung werden die erfassten Benutzereingaben (Konfigurationssignale) in einer Überprüfungseinheit auf Konsistenz geprüft. Die Konsistenzprüfung wird vorzugsweise auf der Steuereinheit 10 ausgeführt. In diesem Fall werden die erfassten Signale an selbige zur Überprüfung übertragen und je nach Ergebnis der Überprüfung wird dem Anwender dann auf der Benutzeroberfläche 24 das Ergebnis mitgeteilt. Bei einer festgestellten Inkonsistenz wird er zur erneuten Eingabe aufgefordert, bei der nur die zulässig auswählbaren Eingabefelder oder Einstellungen aus einem angezeigten Menü aktivierbar sind.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Es liegt somit z.B. ebenso im Rahmen der Erfindung neben der als Bedienterminal ausgebildeten Ein- und Ausgabeeinheit 24 alternativ oder kumulativ andere Schnittstelleninstanzen auszubilden. So kann es in einer Weiterbildung der Erfindung beispielsweise vorgesehen sein, alle Signale, die auf der Ein- und Ausgabeeinheit 24 zur Anzeige gebracht werden sollen und alle Signale seitens des Anwenders, die dort erfasst werden sollen, zusätzlich auch an elektronischen Endgeräten zur Verfügung zu stellen, wie z.B. Smartphones, Tablets oder Mobilfunkgeräte des Anwenders, die über eine drahtlose Kommunikationsverbindung mit der Steuereinheit 10 in Kommunikationsverbindung stehen (z.B. Mobilfunkverbindung). Dazu kann der Anwender bei den Konfigurationseinstellungen angeben, an welche eineindeutige Geräteadresse er den Signalaustausch übermittelt haben möchte. So könnte er sein Waschprogramm auch von zuhause im Vorfeld oder von seinem Tablet-PC steuern. Dabei kann es sich z.B. um handbetätigte oder Stylus-betätigte Bedienoberflächen handeln. Für einen Fachmann ist es insbesondere offensichtlich, dass die Erfindung nicht nur für SB-Waschanlagen mit vier Waschplätzen angewendet werden kann, sondern auch für Einzelwaschplätze oder komplexere Waschanlagen, deren Waschbetrieb und Waschprogramm in Abhängigkeit von Anwendersignalen auf Bedienterminals konfiguriert und gesteuert wird.

Des Weiteren können die Bauteile der SB-Fahrzeugwaschanlage 1 auf mehrere physikalische Produkte verteilt realisiert sein. Insbesondere können die Fahrzeugwaschanlage 1, die Steuereinheit 10 und/oder das Bedienterminal 20 sowie das Touchpanel 24 als verteiltes System ausgebildet sein mit in Datenaustausch stehenden, baulich separaten Einheiten.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 1: SB-Fahrzeugwaschanlage
- 2: Technikeinheit
- 3: Steuermodul
- 10: Steuereinheit
- 100: Steuerlogik, insbesondere elektronische Steuerlogikschaltung
- MEM: Speicher
- NW: Netzwerk
- Z: Server
- 20: Bedienstation oder Bedienterminal
- 12: Waschbaugruppe oder Waschplatz
- 14: Schaumbürste
- 16: Luftinjektor
- 18: Lanze, insbesondere Hochdrucklanze
- 22: Wertmittelaufnahmeeinheit
- 24: Ein- und Ausgabeeinheit, insbesondere Touchpanel

- 401: Vorlagebehälter mit Netztrennung und Wasseruhr
- 402: Ausgleichsbehälter und Druckerhöhungspumpe
- 403: Enthärtungsanlage
- 404: Verteiler
- 405: Heizung
- 406: Hochdruckpumpe
- 407: Osmose Anlage
- 408: Chemieversorgung
- 409: Frostschutz
- 410: Heizlüfter

- a: Ausgeben von Konfigurationseinstellungen
- b: Erfassen von Konfigurationssignalen
- c: Konfiguration des Reinigungsprozesses
- d: Bestimmen des SOLL-Wertes
- e: Ausgeben von Daten auf dem Touchpanel, insbesondere von Preis und konfigurierten Reinigungsprozess
- f: Einlesen von einem Bestätigungssignal auf dem Touchpanel
- g: Einlesen von einem IST-Wert des Sensors der Wertmittelaufnahmeeinheit
- h: Vergleich von SOLL- und IST-Wert
- i: Aktivieren und Ansteuern der Arbeitsgeräte

## Patentansprüche

1. Selbstbedienungsfahrzeugwaschanlage (1) mit:
- Arbeitsgeräten (14, 16 18) und
- einer Bedienstation (20) mit einer als Benutzerschnittstelle dienenden Ein- und Ausgabeeinheit (24), wobei auf der Ein- und Ausgabeeinheit (24) eine Auswahl von Konfigurationseinstellungen ausgegeben wird und in Antwort auf die dargestellten Konfigurationseinstellungen Konfigurationssignale erfasst werden, die an eine Steuereinheit (10) weitergeleitet werden, wobei die Konfigurationseinstellungen eine Menge von technischen Parametern zur Ausführung eines Waschprogramms auf der SB-Fahrzeugwaschanlage sind;
- der Steuereinheit (10), die dazu bestimmt ist, in Antwort auf die erfassten Konfigurationssignale mittels einer Steuerlogik (100) einen Reinigungsprozess zu konfigurieren und Steuerbefehle für die Arbeitsgeräte (14, 16, 18) zu erzeugen und die Arbeitsgeräte (14, 16, 18) gemäß den erzeugten Steuerbefehlen zu steuern **dadurch gekennzeichnet, dass**
die Arbeitsgeräte handbetätigte Reinigungsgeräte sind, umfassend eine Bürste, insbesondere eine Schaumbürste (14) und/oder eine Lanze (18), die als Hochdrucklanze ausgebildet sein kann, und die SB-Fahrzeugwaschanlage (1) mehrere Waschbaugruppen (12) und eine zentrale Technikeinheit (2) mit einem zentralen Steuermodul (3) umfasst, wobei jeweils eine Waschbaugruppe (12) die Arbeitsgeräte (14, 16 18) und eine Bedienstation (20) umfasst, und wobei das zentrale Steuermodul (3) mit der Steuereinheit (10) in Datenaustausch steht und dazu bestimmt ist, die Waschbaugruppen (12) modular und dediziert anzusteuern, und
wobei die Steuereinheit (10) wie in Anspruch 6 definiert ist, und in der Waschbaugruppe (12) ausgebildet ist und zur waschbaugruppen-spezifischen Steuerung der Arbeitsgeräte (14, 16, 18) dient.

2. SB-Fahrzeugwaschanlage (1) nach einem der vorstehenden Patentansprüche, bei der die von der Steuerlogik (100) berechneten Steuerbefehle zur Ansteuerung von Versorgungsaggregaten (401, 402, 403, 404, 405, 406, 407, 408, 409, 410) einer Technikeinheit (2) der SB-Fahrzeugwaschanlage (1) dienen.

3. SB-Fahrzeugwaschanlage (1) nach einem der vorstehenden Patentansprüche, bei der die SB-Fahrzeugwaschanlage (1) eine Wertmittelaufnahmeeinheit (22) mit einem Sensor zur Erfassung eines IST-Wertes eines Wertmittelstandes umfasst, und wobei die Steuereinheit (10) einen Komparator umfasst, der dazu bestimmt ist, den erfassten IST-Wert mit einem SOLL-Wert, der jeweils einem konfigurierten Reinigungsprozess zugeordnet ist, auf Übereinstimmung zu vergleichen und bei Übereinstimmung ein Initialisierungssignal ausgibt und die Arbeitsgeräte (14, 16, 18) mit den erzeugten Steuerbefehlen betreibt.

4. SB-Fahrzeugwaschanlage (1) nach einem der vorstehenden Patentansprüche, bei der die Steuereinheit (10) dazu bestimmt ist, in Antwort auf die erfassten Konfigurationssignale Benutzerhinweise und/oder einen SOLL-Wert aus einem Speicher (MEM) auszulesen und auf der Ein- und Ausgabeeinheit (24) auszugeben.

5. SB-Fahrzeugwaschanlage (1) nach einem der vorstehenden Patentansprüche, die zusätzlich einen akustischen und/oder optischen Signalgeber umfasst, der von der Steuereinheit (10) angesteuert wird, um einen bevorstehenden Betriebswechsel der Arbeitsgeräte (14, 16 18) gemäß dem konfigurierten Reinigungsprozess zu signalisieren.

6. Steuereinheit (10) zur Ansteuerung von Arbeitsgeräten (14, 16, 18) einer SB-Fahrzeugwaschanlage (1) mit:
- Arbeitsgeräten (14, 16 18), bei denen es sich um handbetätigte Reinigungsgeräte handelt, umfassend eine Bürste, insbesondere eine Schaumbürste (14) und/oder eine Lanze (18), die als Hochdrucklanze ausgebildet sein kann,
- einer Bedienstation (20) mit einer als Benutzerschnittstelle dienenden Ein- und Ausgabeeinheit (24), wobei auf der Ein- und Ausgabeeinheit (24) eine Auswahl von Konfigurationseinstellungen ausgegeben wird und in Antwort auf die dargestellten Konfigurationseinstellungen Konfigurationssignale erfasst werden, die an eine Steuereinheit (10) weitergeleitet werden , wobei die Konfigurationseinstellungen eine Menge von technischen Parametern zur Ausführung eines Waschprogramms auf der SB-Fahrzeugwaschanlage sind;
- der Steuereinheit (10), die dazu bestimmt ist, in Antwort auf die erfassten Konfigurationssignale mittels einer Steuerlogik (100) einen Reinigungsprozess zu konfigurieren und Steuerbefehle für die Arbeitsgeräte (14, 16, 18) zu erzeugen und die Arbeitsgeräte (14, 16, 18) gemäß den erzeugten Steuerbefehlen zu steuern, wobei die Steuereinheit von einer Ein- und Ausgabeeinheit (24) Konfigurationssignale einliest und weiterhin dazu bestimmt ist, in Antwort auf die eingelesenen Konfigurationssignale mittels einer Steuerlogik einen Reinigungsprozess zu konfigurieren und Steuerbefehle für die Arbeitsgeräte zu erzeugen und auszuführen, **dadurch gekennzeichnet dass**
die SB-Fahrzeugwaschanlage (1) mehrere Waschbaugruppen (12) und eine zentrale Technikeinheit (2) mit einem zentralen Steuermodul (3) umfasst, wobei jeweils eine Waschbaugruppe (12) die Arbeitsgeräte (14, 16, 18) und eine Bedienstation (20) umfasst, und wobei das zentrale Steuermodul (3) mit der Steuereinheit (10) in Datenaustausch steht und dazu bestimmt ist, die Waschbaugruppen (12) modular und dediziert anzusteuern, und wobei die Steuereinheit (10) in der Waschbaugruppe (12) ausgebildet ist und zur waschbaugruppen-spezifischen Steuerung der Arbeitsgeräte (14, 16, 18) dient, und wobei die Steuerbefehle folgende Parameter steuern:
- Eine zeitphasen-basierte Aktvierung und/oder Deaktivierung von unterschiedlichen Arbeitsgeräten (14, 16, 18);
- eine automatische und dedizierte Drucksteuerung, Temperatursteuerung und/oder Zeitsteuerung für jeweils ein Arbeitsgerät (14, 16, 18);
- eine automatische und dedizierte Bestimmung einer Reinigungsmittelkonzentration für jeweils ein Arbeitsgerät (14, 16, 18);
- eine automatische Bestimmung der Wasserqualität, insbesondere des Einsatzes von Osmose-Wasser, für jeweils ein Arbeitsgerät (14, 16, 18);
- eine Anzeige einer automatisch berechneten Gesamtdauer des konfigurierten Reinigungsprozesses auf der Ein- und Ausgabeeinheit (24);
- eine Anzeige einer automatisch berechneten Zeitdauer für einen Reinigungsschritt des konfigurierten Reinigungsprozesses an jeweils einem der Arbeitsgeräte (14, 16, 18);
- eine Zusammensetzung eines Reinigungsmittels, wie insbesondere einer Schaumqualität;
- eine Bestimmung des Volumenstroms für ein Arbeitsgerät (14, 16, 18).

7. Steuereinheit (10) nach dem vorhergehenden auf die Steuereinheit bezogenen Patentanspruch, wobei die Steuereinheit (10) zur Steuerung der Arbeitsgeräte (14, 16, 18) die erfassten Konfigurationssignale und Eingangssignale verrechnet, insbesondere Eingangssignale von einem Sensor einer Wertmittelaufnahmeeinheit (22).

8. Steuereinheit (10) nach einem der vorhergehenden auf die Steuereinheit bezogenen Patentansprüche, bei der die Steuereinheit (10) einen Speicher (MEM) umfasst oder auf diesen zugreifen kann, der dazu ausgebildet ist, den mittels der Steuerlogik (100) berechneten und konfigurierten Reinigungsprozess zu speichern.

9. Verfahren zur Ansteuerung einer SB-Fahrzeugwaschanlage (1) mit Arbeitsgeräten (14, 16 18), bei denen es sich um handbetätigte Reinigungsgeräte handelt, umfassend eine Bürste, insbesondere eine Schaumbürste (14) und/oder eine Lanze (18), die als Hochdrucklanze ausgebildet sein kann, und einer Bedienstation (20) mit einer als Benutzerschnittstelle dienenden Ein- und Ausgabeeinheit (24), wobei auf der Ein- und Ausgabeeinheit (24) eine Auswahl von Konfigurationseinstellungen ausgegeben wird und in Antwort auf die dargestellten Konfigurationseinstellungen Konfigurationssignale erfasst werden, die an eine Steuereinheit (10) weitergeleitet werden, wobei die Konfigurationseinstellungen eine Menge von technischen Parametern zur Ausführung eines Waschprogramms auf der SB-Fahrzeugwaschanlage sind; und mit der Steuereinheit (10), die dazu bestimmt ist, in Antwort auf die erfassten Konfigurationssignale mittels einer Steuerlogik (100) einen Reinigungsprozess zu konfigurieren und Steuerbefehle für die Arbeitsgeräte (14, 16, 18) zu erzeugen und die Arbeitsgeräte (14, 16, 18) gemäß den erzeugten Steuerbefehlen zu steuern, wobei die SB-Fahrzeugwaschanlage (1) mehrere Waschbaugruppen (12) und eine zentrale Technikeinheit (2) mit einem zentralen Steuermodul (3) umfasst, wobei jeweils eine Waschbaugruppe (12) Arbeitsgeräte (14, 16 18) und eine Bedienstation (20) umfasst, und wobei das zentrale Steuermodul (3) mit einer Steuereinheit (10) in Datenaustausch steht und die Waschbaugruppen (12) modular und dediziert ansteuert, und wobei die Steuereinheit (10) wie in Anspruch 6 definiert ist, und in der Waschbaugruppe (12) ausgebildet ist und zur waschbaugruppen-spezifischen Steuerung der Arbeitsgeräte (14, 16, 18) dient mit folgenden Verfahrensschritten:
- Nach einer Aktivierung des Systems: Ausgabe von Konfigurationseinstellungen zur Auswahl auf einer Ein- und Ausgabeeinheit (24);
- Erfassen von Konfigurationssignalen;
- Automatische Konfiguration eines Reinigungsprozesses auf Basis der erfassten Konfigurationssignale;
- Modulares und dediziertes Ansteuern der Arbeitsgeräte (14, 16, 18) zur Ausführung des konfigurierten Reinigungsprozesses.

10. Verfahren nach dem vorhergehenden Verfahrensanspruch, bei dem die auf der Ein- und Ausgabeeinheit (24) dargestellten Konfigurationseinstellungen folgende Parameter betreffen:
- Einen Arbeitsdruck eines Druckreglers für eine Pumpe, eine Temperatur und/oder eine Konzentration des Reinigungsmittels, einen Härtegrad des Wassers, einen Fahrzeugtyp, eine Zeitdauer des konfigurierten Reinigungsprozesses und/oder eine Zeitdauer von Schritten des konfigurierten Reinigungsprozesses.

11. Verfahren nach einem der vorhergehenden Verfahrensansprüche, bei dem das Verfahren zusätzlich umfasst:
- Bestimmen eines dem konfigurierten Reinigungsprozess zugeordneten SOLL-Wertes
- Einlesen eines IST-Wertes eines Sensors einer Wertmittelaufnahmeeinheit (22)
- Vergleich des SOLL-Wertes mit dem eingelesenen IST-Wert und bei Übereinstimmung: Betreiben der Arbeitsgeräte (14, 16, 18) zur Ausführung des konfigurierten Reinigungsprozesses.

12. Verfahren nach einem der vorhergehenden Verfahrensansprüche, bei dem das Verfahren als einen ersten Schritt ein Aktivieren des Konfigurationssystems für die SB-Fahrzeugwaschanlage (1) umfasst, wobei das Aktivieren das Einlesen von Eingangssignalen und/oder Sensorsignalen umfasst und wobei die auszugebenden Konfigurationseinstellungen in Antwort auf die eingelesenen Eingangssignale und/oder Sensorsignale erzeugt werden.

13. Verfahren nach einem der vorhergehenden Verfahrensansprüche, bei dem während einer Betriebszeit der Arbeitsgeräte (14, 16, 18) reinigungsprozessspezifische weitere Konfigurationseinstellungen erzeugt und auf der Eingabe- und Ausgabeeinheit (24) ausgegeben und in Antwort darauf weitere Konfigurationssignale erfasst und zur veränderten, rekursiven Ansteuerung der Arbeitsgeräte (14, 16, 18) verrechnet werden.

14. Verfahren nach einem der vorhergehenden Verfahrensansprüche, bei dem in Antwort auf die erfassten Konfigurationssignale eine Ausgabe der erfassten Konfigurationssignale und/oder des konfigurierten Reinigungsprozesses auf der Eingabe- und Ausgabeeinheit (24) erfolgt.

15. Verfahren nach einem der vorhergehenden Verfahrensansprüche, bei dem die ausgeführten Steuerbefehle während des Betriebs der Arbeitsgeräte (14, 16, 18) überwacht und einer Berechnungseinheit zugeführt werden, die automatisch Kosten für den Reinigungsprozess berechnet und als SOLL-Wert an die Steuereinheit (10) weiterleitet und auf der Eingabe- und Ausgabeeinheit (24) ausgibt.

16. Computerprogrammprodukt, das in einen internen Speicher eines digitalen Computers einer SB-Fahrzeugwaschanlage (1) geladen werden kann und Softwareroutinen umfasst, mit denen die Schritte des Verfahrens gemäß den vorstehenden Verfahrensansprüchen ausgeführt werden, wenn die Softwareroutinen auf dem digitalen Computer ausgeführt werden.

## Claims

1. Self-service vehicle washing installation (1) having:
- implements (14, 16, 18) and
- an operating station (20) having an input and output unit (24) serving as a user interface, wherein a selection of configuration settings is displayed on the input and output unit (24) and, in response to the displayed configuration settings, configuration signals are detected and forwarded to a control unit (10), wherein the configuration settings are a set of technical parameters for executing a washing program on the self-service vehicle washing system;
- the control unit (10) being designed to configure a cleaning process in response to the detected configuration signals by means of a control logic (100) and to generate control commands for the working devices (14, 16, 18) and to control the working devices (14, 16, 18) in accordance with the generated control commands **characterized in that**
the working devices are manually operated cleaning devices comprising a brush, in particular a foam brush (14) and/or a lance (18), which may be designed as a high-pressure lance, and the self-service vehicle washing system (1) comprises several washing assemblies (12) and a central technical unit (2) with a central control module (3), wherein each washing assembly (12) comprises the working devices (14, 16, 18) and an operating station (20), and wherein the central control module (3) exchanges data with the control unit (10) and is designed to control the washing assemblies (12) in a modular and dedicated manner, and
wherein the control unit (10) as defined in claim 6, and in the washing assembly (12) and serves to control the working devices (14, 16, 18) specific to the washing assembly.

2. Self-service vehicle washing installation (1) according to one of the preceding patent claims, in which the control commands calculated by the control logic (100) for controlling supply units (401, 402, 403, 404, 405, 406, 407, 408, 409, 410) of a technical unit (2) of the self-service vehicle washing system (1).

3. Self-service vehicle washing installation (1) according to one of the preceding patent claims, in which the self-service vehicle washing system (1) comprises a detergent container unit (22) with a sensor for detecting an actual value of a detergent level, and wherein the control unit (10) comprises a comparator which is designed to compare the detected actual value with a target value, which is assigned to a configured cleaning process in each case, for consistency and, if consistent, outputs an initialization signal and operates the working devices (14, 16, 18) with the generated control commands.

4. Self-service vehicle washing system (1) according to one of the preceding patent claims, in which the control unit (10) is designed to read user instructions and/or a target value from a memory (MEM) in response to the detected configuration signals and output them on the input and output unit (24).

5. Self-service vehicle washing system (1) according to one of the preceding patent claims, which additionally comprises an acoustic and/or optical signal generator that is controlled by the control unit (10) in order to signal an impending change in the operation of the working devices (14, 16, 18) in accordance with the configured cleaning process.

6. Control unit (10) for controlling working devices (14, 16, 18) of a self-service vehicle washing system (1) with:
- working devices (14, 16, 18), which are manually operated cleaning devices, comprising a brush, in particular a foam brush (14) ( ), and/or a lance (18), which may be designed as a high-pressure lance,
- an operating station (20) with an input and output unit (24) serving as a user interface, wherein a selection of configuration settings is output on the input and output unit (24) and, in response to the displayed configuration settings, configuration signals are detected and forwarded to a control unit (10), wherein the configuration settings are a set of technical parameters for executing a washing program on the self-service vehicle washing system;
- the control unit (10) being designed to configure a cleaning process in response to the detected configuration signals by means of a control logic (100) and to generate control commands for the working devices (14, 16, 18) and to control the working devices (14, 16, 18) in accordance with the generated control commands, wherein the control unit reads in configuration signals from an input and output unit (24) and is further designed to configure a cleaning process in response to the read-in configuration signals by means of a control logic and to generate and execute control commands for the working devices, **characterized in that**
the self-service vehicle washing system (1) comprises several washing assemblies (12) and a central technical unit (2) with a central control module (3), wherein each washing assembly (12) comprises the working devices (14, 16, 18) and an operating station (20), and wherein the central control module (3) exchanges data with the control unit (10) and is designed to control the washing assemblies (12) in a modular and dedicated manner, and wherein the control unit (10) is formed in the washing assembly (12) and serves to control the working devices (14, 16, 18) and wherein the control commands control the following parameters:
- Time-phase-based activation and/or deactivation of different working devices (14, 16, 18);
- Automatic and dedicated pressure control, temperature control, and/or time control for each working device (14, 16, 18);
- Automatic and dedicated determination of a cleaning agent concentration for each work tool (14, 16, 18);
- Automatic determination of water quality, in particular the use of osmosis water, for each working device (14, 16, 18);
- A display of an automatically calculated total duration of the configured cleaning process on the input and output unit (24);
- Displaying an automatically calculated duration for a cleaning step of the configured cleaning process on each of the work tools (14, 16, 18);
- A composition of a cleaning agent, such as in particular a foam quality;
- A determination of the volume flow for a working device (14, 16, 18).

7. Control unit (10) according to the preceding patent claim relating to the control unit, wherein the control unit (10) calculates the detected configuration signals and input signals, in particular input signals from a sensor of a value recording unit (22), for the purpose of controlling the working devices (14, 16, 18).

8. Control unit (10) according to one of the preceding patent claims relating to the control unit, wherein the control unit (10) comprises or can access a memory (MEM) which is designed to store the cleaning process calculated and configured by means of the control logic (100).

9. Method for controlling a self-service vehicle washing system (1) with working devices (14, 16, 18), which are manually operated cleaning devices comprising a brush, in particular a foam brush (14) and/or a lance (18), which may be designed as a high-pressure lance, and an operating station (20) with an input and output unit (24) serving as a user interface, wherein a selection of configuration settings is output on the input and output unit (24) and, in response to the displayed configuration settings, configuration signals are detected and forwarded to a control unit (10), wherein the configuration settings are a set of technical parameters for executing a washing program on the self-service vehicle washing system; and with the control unit (10) being designed to configure a cleaning process in response to the detected configuration signals by means of a control logic (100) and to generate control commands for the working devices (14, 16, 18) and to control the working devices (14, 16, 18) in accordance with the generated control commands, wherein the self-service vehicle washing system (1) comprises a plurality of washing assemblies (12) and a central technical unit (2) with a central control module (3), wherein each washing assembly (12) comprises working devices (14, 16, 18) and an operating station (20), and wherein the central control module (3) exchanges data with a control unit (10) and controls the washing assemblies (12) in a modular and dedicated manner, and wherein the control unit (10) as defined claim 6, and as in is formed in the washing assembly (12) and serves for washing assembly-specific control of the working devices (14, 16, 18) with the following process steps:
- After activation of the system: Output of configuration settings for selection on an input and output unit (24);
- Detection of configuration signals;
- Automatic configuration of a cleaning process based on the detected configuration signals;
- Modular and dedicated control of the working devices (14, 16, 18) to execute the configured cleaning process.

10. Method according to the preceding method claim, in which the configuration settings displayed on the input and output unit (24) relate to the following parameters:
- A working pressure of a pressure regulator for a pump, a temperature and/or a concentration of the cleaning agent, a degree of water hardness, a vehicle type, a duration of the configured cleaning process and/or a duration of steps of the configured cleaning process.

11. Method according to one of the preceding method claims, wherein the method additionally comprises:
- Determining a target value associated with the configured cleaning process
- reading in an ACTUAL value from a sensor of a value recording unit (22)
- comparing the target value with the read actual value and, if they match: operating the working devices (14, 16, 18) to execute the configured cleaning process.

12. Method according to one of the preceding method claims, wherein the method comprises, as a first step, activating the configuration system for the self-service vehicle washing system (1), wherein the activation comprises reading in input signals and/or sensor signals, and wherein the configuration settings to be output are generated in response to the input signals and/or sensor signals read in.

13. Method according to one of the preceding method claims, wherein during an operating time of the working devices (14, 16, 18), cleaning process-specific further configuration settings are generated and output on the input and output unit (24), and in response thereto, further configuration signals are detected and calculated for the modified, recursive control of the working devices (14, 16, 18).

14. Method according to one of the preceding method claims, in which, in response to the detected configuration signals, an output of the detected configuration signals and/or the configured cleaning process is provided on the input and output unit (24).

15. Method according to one of the preceding method claims, wherein the executed control commands are monitored during operation of the working devices (14, 16, 18) and fed to a computing unit which automatically calculates the costs for the cleaning process and forwards them as a target value to the control unit (10) and outputs them on the input and output unit (24).

16. Computer program product that can be loaded into an internal memory of a digital computer of a self-service vehicle washing system (1) and comprises software routines with which the steps of the method according to the preceding method claims are executed when the software routines are executed on the digital computer.

## Revendications

1. Station de lavage de véhicules en libre-service (1) comprenant :
- des outils de travail (14, 16, 18) et
- un poste de commande (20) avec une unité d'entrée et de sortie (24) servant d'interface utilisateur, une sélection de paramètres de configuration étant affichée sur l'unité d'entrée et de sortie (24) et des signaux de configuration étant enregistrés en réponse aux paramètres de configuration affichés, lesquels sont transmis à une unité de commande (10), les paramètres de configuration étant un ensemble de paramètres techniques pour l'exécution d'un programme de lavage sur la station de lavage de véhicules en libre-service ;
- l'unité de commande (10) étant destinée à configurer un processus de nettoyage en réponse aux signaux de configuration détectés au moyen d'une logique de commande (100) et à générer des commandes de commande pour les outils de travail (14, 16, 18) et de commander les outils de travail (14, 16, 18) conformément aux commandes de commande **générées caractérisé en ce que**
les outils de travail sont des appareils de nettoyage à commande manuelle, comprenant une brosse, en particulier une brosse à mousse (14) et/ou une lance (18), qui peut être conçue comme une lance à haute pression, et que la station de lavage de véhicules en libre-service (1) comprend plusieurs modules de lavage (12) et une unité technique centrale (2) avec un module de commande central (3), chaque module de lavage (12) comprenant les outils de travail (14, 16, 18) et un poste de commande (20), et le module de commande central (3) échangeant des données avec l'unité de commande (10) et étant destiné à commander les modules de lavage (12) de manière modulaire et dédiée, et
l'unité de commande (10) étantdéfinie, et telle que dans la revendication 6 étant formée dans le module de lavage (12) et servant à la commande spécifique au module de lavage des outils de travail (14, 16, 18).

2. Station de lavage de véhicules en libre-service (1) selon l'une des revendications précédentes, dans laquelle les commandes calculées par la logique de commande (100) pour commander les groupes d'alimentation (401, 402, 403, 404, 405, 406, 407, 408, 409, 410) d'une unité technique (2) de la station de lavage de véhicules en libre-service (1).

3. Station de lavage de véhicules en libre-service (1) selon l'une des revendications précédentes, dans laquelle la station de lavage de véhicules en libre-service (1) comprend une unité de réception de moyens de paiement (22) avec un capteur pour détecter une valeur réelle d'un niveau de moyens de paiement, et dans laquelle l'unité de commande (10) comprend un comparateur qui est destiné à comparer la valeur réelle détectée avec une valeur de consigne qui est attribuée à chaque processus de nettoyage configuré afin de vérifier leur concordance et, en cas de concordance, à émettre un signal d'initialisation et à faire fonctionner les outils de travail (14, 16, 18) avec les commandes de commande générées.

4. Station de lavage de véhicules en libre-service (1) selon l'une des revendications précédentes, dans laquelle l'unité de commande (10) est destinée, en réponse aux signaux de configuration détectés, à lire des instructions utilisateur et/ou une valeur de consigne à partir d'une mémoire (MEM) et à les émettre sur l'unité d'entrée et de sortie (24).

5. Station de lavage de véhicules en libre-service (1) selon l'une des revendications précédentes, qui comprend en outre un émetteur de signaux acoustiques et/ou optiques commandé par l'unité de commande (10) afin de signaler un changement imminent du mode de fonctionnement des outils de travail (14, 16, 18) conformément au processus de nettoyage configuré.

6. Unité de commande (10) pour commander les outils de travail (14, 16, 18) d'une station de lavage de véhicules en libre-service (1) avec :
- des outils de travail (14, 16, 18) qui sont des appareils de nettoyage à commande manuelle, comprenant une brosse, en particulier une brosse à mousse e (14) et/ou une lance (18) qui peut être conçue comme une lance à haute pression,
- un poste de commande (20) avec une unité d'entrée et de sortie (24) servant d'interface utilisateur, une sélection de paramètres de configuration étant affichée sur l'unité d'entrée et de sortie (24) et des signaux de configuration étant détectés en réponse aux paramètres de configuration affichés, lesquels sont transmis à une unité de commande (10) , les paramètres de configuration étant un ensemble de paramètres techniques pour l'exécution d'un programme de lavage sur la station de lavage de véhicules en libre-service ;
- l'unité de commande (10) étant destinée à configurer un processus de nettoyage en réponse aux signaux de configuration détectés à l'aide d'une logique de commande (100) et à générer des commandes de commande pour les outils de travail (14, 16, 18) et à commander les outils de travail (14, 16, 18) conformément aux commandes de commande générées, l'unité de commande lisant des signaux de configuration à partir d'une unité d'entrée et de sortie (24) et étant en outre destinée à configurer un processus de nettoyage au moyen d'une logique de commande en réponse aux signaux de configuration lus et à générer et exécuter des commandes de commande pour les outils de travail, **caractérisée en ce que**
la station de lavage de véhicules en libre-service (1) comprend plusieurs modules de lavage (12) et une unité technique centrale (2) avec un module de commande central (3), chaque module de lavage (12) comprenant les outils de travail (14, 16, 18) et un poste de commande (20), et le module de commande central (3) échangeant des données avec l'unité de commande (10) et étant destiné à commander les modules de lavage (12) de manière modulaire et dédiée, et l'unité de commande (10) étant formée dans le module de lavage (12) et servant à la commande spécifique au module de lavage des outils de travail (14, 16, 18), et les commandes de commande commandant les paramètres suivants :
- une activation et/ou une désactivation basée sur des phases temporelles de différents outils de travail (14, 16, 18) ;
- une commande automatique et dédiée de la pression, de la température et/ou du temps pour chaque outil de travail (14, 16, 18) ;
- une détermination automatique et dédiée d'une concentration de produit nettoyant pour chaque outil de travail (14, 16, 18) ;
- une détermination automatique de la qualité de l'eau, en particulier de l'utilisation d'eau osmosée, pour chaque outil de travail (14, 16, 18) ;
- un affichage d'une durée totale calculée automatiquement du processus de nettoyage configuré sur l'unité d'entrée et de sortie (24) ;
- un affichage d'une durée calculée automatiquement pour une étape de nettoyage du processus de nettoyage configuré sur chacun des appareils de travail (14, 16, 18) ;
- une composition d'un produit de nettoyage, comme en particulier une qualité de mousse ;
- une détermination du débit volumique pour un outil de travail (14, 16, 18).

7. Unité de commande (10) selon la revendication précédente relative à l'unité de commande, l'unité de commande (10) calculant les signaux de configuration et les signaux d'entrée enregistrés pour commander les outils de travail (14, 16, 18), en particulier les signaux d'entrée provenant d'un capteur d'une unité d'enregistrement de valeurs moyennes (22).

8. Unité de commande (10) selon l'une des revendications précédentes relatives à l'unité de commande, dans laquelle l'unité de commande (10) comprend une mémoire (MEM) ou peut accéder à celle-ci, qui est conçue pour enregistrer le processus de nettoyage calculé et configuré au moyen de la logique de commande (100).

9. Procédé de commande d'une station de lavage de véhicules en libre-service (1) avec des outils de travail (14, 16, 18) qui sont des appareils de nettoyage à commande manuelle, comprenant une brosse, en particulier une brosse à mousse (14) et/ou une lance (18) qui peut être conçue comme une lance à haute pression, et un poste de commande (20) avec une unité d'entrée et de sortie (24) servant d'interface utilisateur, une sélection de réglages de configuration étant affichée sur l'unité d'entrée et de sortie (24) et des signaux de configuration étant enregistrés en réponse aux réglages de configuration affichés, lesquels sont transmis à une unité de commande (10), les réglages de configuration étant un ensemble de paramètres techniques pour l'exécution d'un programme de lavage sur la station de lavage de véhicules en libre-service ; et l'unité de commande (10) étant destinée à configurer un processus de nettoyage en réponse aux signaux de configuration détectés au moyen d'une logique de commande (100) et à générer des commandes de commande pour les outils de travail (14, 16, 18) et à commander les outils de travail (14, 16, 18) conformément aux commandes de commande générées, l'installation de lavage de véhicules en libre-service (1) comprenant plusieurs modules de lavage (12) et une unité technique centrale (2) avec un module de commande central (3), chaque module de lavage (12) comprenant des outils de travail (14, 16, 18) et un poste de commande (20), et le module de commande central (3) échangeant des données avec une unité de commande (10) et commandant les modules de lavage (12) de manière modulaire et dédiée, et l'unité de commande (10) étant définie la revendication 6, et comme dans est formée dans le module de lavage (12) et sert à la commande spécifique au module de lavage des outils de travail (14, 16, 18) avec les étapes de procédé suivantes :
- Après activation du système : édition des paramètres de configuration pour sélection sur une unité d'entrée et de sortie (24) ;
- détection de signaux de configuration ;
- configuration automatique d'un processus de nettoyage sur la base des signaux de configuration détectés ;
- commande modulaire et dédiée des outils de travail (14, 16, 18) pour l'exécution du processus de nettoyage configuré.

10. Procédé selon la revendication de procédé précédente, dans lequel les paramètres de configuration affichés sur l'unité d'entrée et de sortie (24) concernent les paramètres suivants :
- une pression de service d'un régulateur de pression pour une pompe, une température et/ou une concentration du produit de nettoyage, un degré de dureté de l'eau, un type de véhicule, une durée du processus de nettoyage configuré et/ou une durée des étapes du processus de nettoyage configuré.

11. Procédé selon l'une des revendications précédentes, dans lequel le procédé comprend en outre :
- la détermination d'une valeur de consigne associée au processus de nettoyage configuré
- la lecture d'une valeur réelle d'un capteur d'une unité d'enregistrement de valeurs (22)
- la comparaison de la valeur de consigne avec la valeur réelle lue et, en cas de concordance : l'activation des outils de travail (14, 16, 18) pour l'exécution du processus de nettoyage configuré.

12. Procédé selon l'une des revendications de procédé précédentes, dans lequel le procédé comprend, comme première étape, l'activation du système de configuration pour la station de lavage de véhicules en libre-service (1), l'activation comprenant la lecture de signaux d'entrée et/ou de signaux de capteurs, et les réglages de configuration à émettre étant générés en réponse aux signaux d'entrée et/ou aux signaux de capteurs lus.

13. Procédé selon l'une des revendications de procédé précédentes, dans lequel, pendant une période de fonctionnement des outils de travail (14, 16, 18), d'autres paramètres de configuration spécifiques au processus de nettoyage sont générés et émis sur l'unité d'entrée et de sortie (24) et, en réponse à cela, d'autres signaux de configuration sont enregistrés et calculés pour la commande modifiée et récursive des outils de travail (14, 16, 18).

14. Procédé selon l'une des revendications de procédé précédentes, dans lequel, en réponse aux signaux de configuration détectés, une sortie des signaux de configuration détectés et/ou du processus de nettoyage configuré est effectuée sur l'unité d'entrée et de sortie (24).

15. Procédé selon l'une des revendications précédentes, dans lequel les commandes exécutées pendant le fonctionnement des outils de travail (14, 16, 18) et sont transmises à une unité de calcul qui calcule automatiquement les coûts du processus de nettoyage, les transmet à l'unité de commande (10) sous forme de valeur de consigne et les affiche sur l'unité d'entrée et de sortie (24).

16. Produit logiciel pouvant être chargé dans une mémoire interne d'un ordinateur numérique d'une station de lavage de véhicules en libre-service (1) et comprenant des routines logicielles permettant d'exécuter les étapes du procédé selon les revendications de procédé ci-dessus lorsque les routines logicielles sont exécutées sur l'ordinateur numérique.
